# EUROPEAN PATENT APPLICATION

(11) **EP 4 582 980 A1**
(43) Date of publication of application: **09.07.2025**
(21) Application number: 23867341.2
(22) Date of filing: 12.09.2023
(51) Int. Cl.: G06F 18/214

(54) **MODEL PROCESSING METHOD AND DEVICE, AND MODEL-BASED DATA PROCESSING METHOD AND DEVICE**

(30) Priority: 20.09.2022 CN 202211145581
(71) Applicant: Huawei Technologies Co., Ltd., Shenzhen, Guangdong 518129 (CN)
(72) Inventor: YANG, Yuan, Shenzhen, Guangdong 518129 (CN); JIN, Xiulang, Shenzhen, Guangdong 518129 (CN); ZHANG, Shukun, Shenzhen, Guangdong 518129 (CN); WANG, Ze, Shenzhen, Guangdong 518129 (CN)
(74) Representative: Maiwald GmbH
(86) International application number: PCT/CN2023/118186
(87) International publication number: WO 2024/061052

(57) **Abstract**

A model processing method is provided and applied to the field of artificial intelligence (Artificial Intelligence, AI) technologies. In the method, a new obfuscation computing node is added on the basis of original computation logic of an AI model, an execution relationship between an original computing node and the obfuscation node is determined by using an expression, and a correct computing node can be executed only when an output of the expression is correct. In this way, an operator execution sequence and dependency relationship in the original model can be obscured by using the newly added obfuscation node, to scramble a model structure. In addition, encrypted protection needs to be performed only on the newly added expression, to protect an entire normal execution procedure of the AI model, and reduce additional performance overheads caused by model protection, thereby facilitating promotion and application of the AI model.

## Description

This application claims priority to Chinese Patent Application No. 202211145581.9, filed with the China National Intellectual Property Administration on September 20, 2022 and entitled "MODEL PROCESSING METHOD, MODEL-BASED DATA PROCESSING METHOD, AND RELATED APPARATUS", which is incorporated herein by reference in its entirety.

### TECHNICAL FIELD

This application relates to the field of artificial intelligence (Artificial Intelligence, AI) technologies, and in particular, to a model processing method and a related apparatus.

### BACKGROUND

With continuous breakthroughs in AI theories and hardware computing power, AI technologies have developed rapidly. In fields such as computer vision, natural language processing, and speech recognition, AI systems have been deployed on a large scale, and an increasing quantity of manufacturers provide AI services. Generally, after locally completing model training and tuning, an AI service provider deploys an AI model on a third-party platform (for example, a terminal device, an edge device, and a cloud server) to provide an inference service. Design and training of the AI model require a large amount of time, data, and computing power. Therefore, how to prevent the AI model from being stolen during transmission, storage, running, and the like has become a top concern of the AI service provider.

To resolve the problem that the AI model is prone to be stolen, some model confidentiality protection solutions are currently proposed in the industry. For example, in an encryption and decryption algorithm-based model protection solution, an AI model in a transmission and storage process is encrypted by using an encryption algorithm, and the AI model is decrypted into a memory before inference of the AI model is performed. In this solution, although confidentiality of the AI model can be protected, the entire AI model needs to be decrypted each time before inference of the AI model is performed, resulting in excessively high computing overheads. Consequently, an inference delay of the AI model is greatly prolonged, and application of the AI model is severely limited.

Therefore, how to implement efficient model confidentiality protection becomes an urgent problem to be resolved.

### SUMMARY

This application provides a model processing method, to protect an entire normal execution procedure of an AI model, and reduce additional performance overheads caused by model protection, thereby facilitating promotion and application of the AI model.

According to a first aspect of this application, a model processing method is provided and applied to a physical device such as a server or a terminal device, or a virtual device. For example, the method is applied to a server. The method includes: The server obtains a first computation graph by parsing a model file of an AI model, where the first computation graph indicates execution logic of the AI model, and the first computation graph includes at least one operator. That is, the first computation graph may indicate the execution logic of the AI model by indicating a dependency relationship between the at least one operator. The execution logic of the AI model may mean to execute the at least one operator in an orderly manner.

Then, the server generates a second computation graph based on the first computation graph, where the second computation graph includes at least one computation branch, at least one obfuscation branch, and a first expression, an output of the first expression indicates to execute a branch in the at least one computation branch or a branch in the at least one obfuscation branch, the at least one operator in the first computation graph is included in the at least one computation branch in the second computation graph, and the at least one computation branch has different computation logic from the at least one obfuscation branch. When the output of the first expression is correct, the at least one computation branch in the second computation graph is executed, to ensure that actual computation logic is the same as computation logic of the original AI model; or when the output of the first expression is incorrect, the at least one obfuscation branch in the second computation graph is executed, so that actual computation logic is different from computation logic of the original AI model, to protect the AI model. The obfuscation branch is a branch including an operator, and data input to the obfuscation branch can be computed by using the operator in the obfuscation branch, to obtain output data. In addition, because computation logic of the obfuscation branch is different from computation logic of the computation branch, that is, the operator in the obfuscation branch is different from an operator in the computation branch, the obfuscation branch and the computation branch can obtain different output data for same input data.

Then, the server generates execution code corresponding to the AI model based on the second computation graph, where target code in the execution code is configured with encrypted protection, and the target code is code related to the first expression. In the second computation graph, the output of the first expression can affect an execution status between the computation branch and the obfuscation branch in the second computation graph. Therefore, computation logic in the second computation graph can be protected by performing encrypted protection on the target code of the first expression. In simple terms, even if an attacker steals the AI model by stealing the execution code corresponding to the AI model, because encrypted protection is performed on the target code corresponding to the first expression, the attacker cannot obtain computation logic of the first expression, and therefore cannot obtain a correct output value, and cannot obtain correct execution logic of the AI model.

An obfuscation branch parallel to the computation branch in the AI model is added on the basis of original computation logic of the AI model, an execution relationship between the computation branch and the obfuscation branch is determined by using an expression, and a correct computation branch can be executed only when an output of the expression is correct. In this way, an explicit operator execution sequence and dependency relationship in the original model can be obscured by using the newly added obfuscation branch, to scramble a model structure. In addition, encrypted protection needs to be performed only on the newly added expression, to protect an entire normal execution procedure of the AI model, and reduce additional performance overheads caused by model protection, thereby facilitating promotion and application of the AI model.

In a possible implementation, the second computation graph includes only one computation branch; and the output of the first expression indicates to execute one of the computation branch and the at least one obfuscation branch. The computation branch in the second computation graph includes all operators in the first computation graph and a dependency relationship between all the operators. Therefore, computation logic in the first computation graph can be implemented by executing the computation branch in the second computation graph. In addition, the first expression may be separately connected to the computation branch and the at least one obfuscation branch, and indicates to execute any one of the computation branch and the at least one obfuscation branch. The computation branch in the second computation graph is executed only when the output of the first expression is a preset target value. Otherwise, when the output of the first expression is not a preset target value, one of the at least one obfuscation branch in the second computation graph is executed.

That the first expression is connected to the computation branch and the at least one obfuscation branch may mean that it is defined, in code, to make a jump to the computation branch and the at least one obfuscation branch based on an output value of the first expression. Therefore, after the first expression is executed, a jump can be made to execute the computation branch or the at least one obfuscation branch.

**In** this solution, one or more obfuscation branches parallel to the computation branch are disposed in the second computation graph, so that an explicit operator execution sequence and dependency relationship in the original model can be effectively obscured, to scramble a model structure and improve confidentiality protection of the model.

**In** a possible implementation, the second computation graph includes a plurality of computation branches, and the second computation graph further includes a second expression; the output of the first expression indicates to execute one of the plurality of computation branches and the at least one obfuscation branch; and the second expression is connected to the plurality of computation branches and the at least one obfuscation branch, the second expression indicates a quantity of times the first expression is repeatedly executed, and an input to the first expression is related to a branch executed last time.

That the second expression is connected to the computation branches and the at least one obfuscation branch may mean that it is defined, in code, to make, after any one of the plurality of computation branches and the at least one obfuscation branch is executed, a jump to execute the second expression. Therefore, after any computation branch or obfuscation branch is executed, a jump to the second expression can be made, so that the second expression indicates whether to continue to repeatedly execute the first expression.

That is, the plurality of computation branches and the at least one obfuscation branch in the second computation graph are parallel, the first expression is used to control a branch that needs to be executed, and the second expression is used to control the quantity of times the first expression is repeatedly executed. Therefore, corresponding computation branches can be sequentially executed through cooperation of the second expression and the first expression. In addition, an explicit operator execution sequence and dependency relationship in the original model can be effectively obscured by using the at least one parallel obfuscation branch, to scramble a model structure and improve confidentiality protection of the model.

In a possible implementation, an input to the second expression is related to a branch executed last time, and an output of the second expression indicates whether to repeatedly execute the first expression.

In a process of executing the second computation graph, the first expression is run based on an input value, to obtain an output value of the first expression; and then a to-be-executed branch is determined based on the output value of the first expression. After the branch is executed, the second expression is executed to determine whether to continue to repeatedly execute the first expression. When it is determined to continue to repeat the first expression, the first expression continues to be executed based on an output value obtained through branch execution, to determine a next branch that needs to be executed. The foregoing steps are repeatedly performed until it is determined, based on an output value of the second expression, to terminate repetition of the first expression. In this way, the plurality of computation branches are sequentially executed, so that the computation logic in the second computation graph is the same as the computation logic in the first computation graph.

In a possible implementation, an initial input to the first expression includes a first value, and the first value is configured with encrypted protection. For example, the first value is configured to be run in a trusted execution environment; or the first value is configured to be encrypted by using an encryption algorithm.

That is, the initial input to the first expression may be fixed, and the first expression can output a correct value only when the initial input to the first expression is the first value, so that the computation logic in the second computation graph is the same as the computation logic in the first computation graph. In addition, the output of the first expression can be protected by configuring the first value with encrypted protection. Even if an attacker obtains the entire second computation graph, correct computation logic in the second computation graph cannot be obtained because a correct input value of the first expression cannot be obtained, thereby implementing confidentiality protection of the model.

In a possible implementation, the target code is configured to be run in a trusted execution environment, and/or the target code is configured to perform code obfuscation. When a terminal device of a model user needs to run the AI model, the terminal device may load the target code into the trusted execution environment for running, to implement encrypted protection on the target code based on the trusted execution environment. In addition, when the target code is configured to perform code obfuscation, the target code is converted into code that has a same function but is difficult to read and understand, to protect the target code without affecting normal execution of the target code.

In a possible implementation, the target code is configured with encrypted protection by using an encryption algorithm. When the terminal device of the model user needs to run the AI model, the terminal device needs to first decrypt the target code by using a decryption algorithm, to obtain decrypted code, and then obtains the first expression based on the decrypted code. For example, the encryption algorithm may be, for example, an advanced encryption standard (Advanced Encryption Standard, AES) algorithm, a data encryption standard (Data Encryption Standard, DES) algorithm, an international data encryption algorithm (International Data Encryption Algorithm, IDEA), and an RSA algorithm.

In a possible implementation, the method further includes: The server obtains a third computation graph, where the third computation graph indicates the execution logic of the AI model, and the third computation graph includes a first operator. The third computation graph and the first computation graph may be two different computation graphs in the AI model. Alternatively, the third computation graph may be a computation subgraph of the first computation graph, that is, the first operator included in the third computation graph is one of a plurality of operators in the first computation graph.

The server generates a fourth computation graph based on the third computation graph, where the fourth computation graph includes a second operator and a third expression, the second operator is obtained after a weight parameter of the first operator is modified, an input to the third expression includes an output of the second operator, and an output of the third expression is the same as an output when the first operator uses a same input as the second operator. In simple terms, when a weight parameter of the second operator is obtained by modifying the weight parameter of the first operator, based on a same input, an output of the second operator is definitely different from an output of the first operator. Therefore, the third expression is introduced to convert the output of the second operator into a value that is the same as the output of the first operator.

Finally, the server generates the execution code corresponding to the AI model based on the second computation graph and the fourth computation graph.

In this solution, the weight parameter of the operator in the AI model is scrambled, so that each explicit operator in the AI model can be effectively obfuscated, to effectively prevent an attacker from stealing the AI model by stealing the operator in the AI model, and protect confidentiality of the AI model.

In a possible implementation, the weight parameter of the second operator is obtained after the weight parameter of the first operator is modified based on a second value, the input to the third expression includes the second value, and the second value is configured with encrypted protection.

When the input to the third expression is incorrect, the third expression cannot convert the output of the second operator into the output of the first operator. Therefore, computation logic in the fourth computation graph can be protected by performing encrypted protection on the first value, to protect an entire normal execution procedure of the AI model, and reduce additional performance overheads caused by model protection.

According to a second aspect of this application, a model-based data processing method is provided and applied to a device on which an AI model is deployed, for example, a physical device such as a server or a terminal device, or a virtual device. For example, the method is applied to a terminal device. The method includes: The terminal device obtains a second computation graph based on execution code of an AI model, where the second computation graph includes at least one computation branch, at least one obfuscation branch, and a first expression, an output of the first expression indicates to execute a branch in the at least one computation branch or a branch in the at least one obfuscation branch, the at least one computation branch includes at least one operator in the AI model, the at least one computation branch has different computation logic from the at least one obfuscation branch, target code in the execution code is configured with encrypted protection, and the target code is code related to the first expression; the terminal device obtains input data of the AI model; and the terminal device processes the input data based on the second computation graph, to obtain output data of the AI model.

In a possible implementation, the second computation graph includes only one computation branch; and the output of the first expression indicates to execute one of the computation branch and the at least one obfuscation branch.

In a possible implementation, the second computation graph includes a plurality of computation branches, and the second computation graph further includes a second expression; the output of the first expression indicates to execute one of the plurality of computation branches and the at least one obfuscation branch; and the second expression is connected to the plurality of computation branches and the at least one obfuscation branch, and the second expression indicates a quantity of times the first expression is repeatedly executed.

In a possible implementation, an input to the second expression is related to a branch executed last time, and an output of the second expression indicates whether to repeatedly execute the first expression.

In a possible implementation, an initial input to the first expression includes a first value, and the first value is configured with encrypted protection.

In a possible implementation, the target code is configured to be run in a trusted execution environment, and/or the target code is configured to perform code obfuscation.

In a possible implementation, the target code is configured with encrypted protection by using an encryption algorithm; the terminal device may decrypt the target code in the execution code to obtain decrypted code; and the terminal device executes the decrypted code to obtain the first expression.

In a possible implementation, the method further includes: obtaining a fourth computation graph based on the execution code of the AI model, where the fourth computation graph includes a second operator and a third expression, the second operator is obtained after a weight parameter of a first operator in the AI model is modified, an input to the third expression includes an output of the second operator, and an output of the third expression is the same as an output when the first operator uses a same input as the second operator; and the processing the input data based on the second computation graph includes: processing the input data based on the second computation graph and the fourth computation graph.

In a possible implementation, a weight parameter of the second operator is obtained after the weight parameter of the first operator is modified based on a second value, the input to the third expression includes the second value, and the second value is configured with encrypted protection.

According to a third aspect of this application, a model processing apparatus is provided and includes: an obtaining module, configured to obtain a first computation graph, where the first computation graph indicates execution logic of an artificial intelligence AI model, and the first computation graph includes at least one operator; and a processing module, configured to generate a second computation graph based on the first computation graph, where the second computation graph includes at least one computation branch, at least one obfuscation branch, and a first expression, an output of the first expression indicates to execute a branch in the at least one computation branch or a branch in the at least one obfuscation branch, the at least one operator is included in the at least one computation branch, and the at least one computation branch has different computation logic from the at least one obfuscation branch. The processing module is configured to generate execution code corresponding to the AI model based on the second computation graph, where target code related to the first expression in the execution code is configured with encrypted protection.

In a possible implementation, the second computation graph includes only one computation branch; and the output of the first expression indicates to execute one of the computation branch and the at least one obfuscation branch.

In a possible implementation, the second computation graph includes a plurality of computation branches, and the second computation graph further includes a second expression; the output of the first expression indicates to execute one of the plurality of computation branches and the at least one obfuscation branch; and the second expression is connected to the plurality of computation branches and the at least one obfuscation branch, the second expression indicates a quantity of times the first expression is repeatedly executed, and an input to the first expression is related to a branch executed last time.

In a possible implementation, an input to the second expression is related to a branch executed last time, and an output of the second expression indicates whether to repeatedly execute the first expression.

In a possible implementation, an initial input to the first expression includes a first value, and the first value is configured with encrypted protection.

In a possible implementation, the target code is configured to be run in a trusted execution environment, and/or the target code is configured to perform code obfuscation.

In a possible implementation, the target code is configured with encrypted protection by using an encryption algorithm.

In a possible implementation, the obtaining module is further configured to obtain a third computation graph, where the third computation graph indicates the execution logic of the AI model, and the third computation graph includes a first operator; and the processing module is further configured to: generate a fourth computation graph based on the third computation graph, where the fourth computation graph includes a second operator and a third expression, the second operator is obtained after a weight parameter of the first operator is modified, an input to the third expression includes an output of the second operator, and an output of the third expression is the same as an output when the first operator uses a same input as the second operator; and generate the execution code corresponding to the AI model based on the second computation graph and the fourth computation graph.

In a possible implementation, a weight parameter of the second operator is obtained after the weight parameter of the first operator is modified based on a second value, the input to the third expression includes the second value, and the second value is configured with encrypted protection.

According to a fourth aspect of this application, a model-based data processing apparatus is provided and includes: an obtaining module, configured to obtain a second computation graph based on execution code of an AI model, where the second computation graph includes at least one computation branch, at least one obfuscation branch, and a first expression, an output of the first expression indicates to execute a branch in the at least one computation branch or a branch in the at least one obfuscation branch, the at least one computation branch includes at least one operator in the AI model, the at least one computation branch has different computation logic from the at least one obfuscation branch, and target code related to the first expression in the execution code is configured with encrypted protection, where the obtaining module is further configured to obtain input data of the AI model; and a processing module, further configured to process the input data based on the second computation graph, to obtain output data of the AI model.

In a possible implementation, the second computation graph includes only one computation branch; and the output of the first expression indicates to execute one of the computation branch and the at least one obfuscation branch.

In a possible implementation, the second computation graph includes a plurality of computation branches, and the second computation graph further includes a second expression; the output of the first expression indicates to execute one of the plurality of computation branches and the at least one obfuscation branch; and the second expression is connected to the plurality of computation branches and the at least one obfuscation branch, the second expression indicates a quantity of times the first expression is repeatedly executed, and an input to the first expression is related to a branch executed last time.

In a possible implementation, an input to the second expression is related to a branch executed last time, and an output of the second expression indicates whether to repeatedly execute the first expression.

In a possible implementation, an initial input to the first expression includes a first value, and the first value is configured with encrypted protection.

In a possible implementation, the target code is configured to be run in a trusted execution environment, and/or the target code is configured to perform code obfuscation.

In a possible implementation, the target code is configured with encrypted protection by using an encryption algorithm; and the processing module is further configured to: decrypt the target code in the execution code to obtain decrypted code; and execute the decrypted code to obtain the first expression.

In a possible implementation, the obtaining module is further configured to obtain a fourth computation graph based on the execution code of the AI model, where the fourth computation graph includes a second operator and a third expression, the second operator is obtained after a weight parameter of a first operator in the AI model is modified, an input to the third expression includes an output of the second operator, and an output of the third expression is the same as an output when the first operator uses a same input as the second operator; and the processing module is further configured to process the input data based on the second computation graph and the fourth computation graph.

In a possible implementation, a weight parameter of the second operator is obtained after the weight parameter of the first operator is modified based on a second value, the input to the third expression includes the second value, and the second value is configured with encrypted protection.

According to a fifth aspect of this application, an electronic device is provided. The electronic device includes a storage and a processor. The storage stores code. The processor is configured to execute the code. When the code is executed, the electronic device performs the method in any implementation of the first aspect.

According to a sixth aspect of this application, an electronic device is provided. The electronic device includes a storage and a processor. The storage stores code. The processor is configured to execute the code. When the code is executed, the electronic device performs the method in any implementation of the second aspect.

According to a seventh aspect of this application, an AI system is provided. The AI system includes the model processing apparatus in any implementation of the third aspect and the model-based data processing apparatus in any implementation of the fourth aspect.

According to an eighth aspect of this application, a computer-readable storage medium is provided. The computer-readable storage medium stores a computer program, and when the computer program is run on a computer, the computer is enabled to perform the method in any implementation of the first aspect or the second aspect.

According to a ninth aspect of this application, a computer program product is provided. When the computer program product is run on a computer, the computer is enabled to perform the method in any implementation of the first aspect or the second aspect.

According to a tenth aspect of this application, a chip is provided and includes one or more processors. Some or all of the processors are configured to read and execute a computer program stored in a storage, to perform the method in any implementation of the first aspect or the second aspect.

Optionally, the chip further includes the storage, and the storage is connected to the processor through a circuit or a wire. Optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface. The method provided in this application may be implemented by one chip, or may be cooperatively implemented by a plurality of chips.

For technical effects brought by any design manner of the second aspect to the tenth aspect, refer to the technical effects brought by different implementations of the first aspect. Details are not described herein again.

### BRIEF DESCRIPTION OF DRAWINGS

FIG. 1 is a diagram of deploying a model file in a plaintext form according to an embodiment of this application;
FIG. 2 is a diagram of deploying a model file through encryption according to an embodiment of this application;
FIG. 3 is a diagram of an application scenario of a model processing method according to an embodiment of this application;
FIG. 4 is a schematic flowchart of a model processing method according to an embodiment of this application;
FIG. 5A is a diagram of a structure of generating a second computation graph based on a first computation graph according to an embodiment of this application;
FIG. 5B is another diagram of a structure of generating a second computation graph based on a first computation graph according to an embodiment of this application;
FIG. 6A is another diagram of a structure of generating a second computation graph based on a first computation graph according to an embodiment of this application;
FIG. 6B is a diagram of running of a second computation graph according to an embodiment of this application;
FIG. 7A is another diagram of a structure of generating a second computation graph based on a first computation graph according to an embodiment of this application;
FIG. 7B is a diagram of executing a second computation graph according to an embodiment of this application;
FIG. 8 is another diagram of a structure of generating a second computation graph based on a first computation graph according to an embodiment of this application;
FIG. 9 is a diagram of obtaining a fourth computation graph based on a third computation graph according to an embodiment of this application;
FIG. 10 is a schematic flowchart of a model-based data processing method according to an embodiment of this application;
FIG. 11 is a schematic flowchart of model processing and model-based data processing according to an embodiment of this application;
FIG. 12 is a diagram of a structure of a model processing apparatus according to an embodiment of this application;
FIG. 13 is a diagram of a structure of a model-based data processing apparatus according to an embodiment of this application;
FIG. 14 is a diagram of a structure of an execution device according to an embodiment of this application;
FIG. 15 is a diagram of a structure of a chip according to an embodiment of this application; and
FIG. 16 is a diagram of a structure of a computer-readable storage medium according to an embodiment of this application.

### DESCRIPTION OF EMBODIMENTS

To make the objectives, technical solutions, and advantages of this application clearer and more comprehensible, embodiments of this application are described below with reference to the accompanying drawings. Clearly, the described embodiments are merely some but not all of embodiments of this application. A person of ordinary skill in the art may learn that as a new application scenario emerges, the technical solutions provided in embodiments of this application are also applicable to a similar technical problem.

The terms "first", "second", and the like in the specification, the claims, and the accompanying drawings of this application are used to distinguish between similar objects, and are not necessarily used to describe a specific order or sequence. It should be understood that the descriptions used in such a manner are interchangeable in proper situations, so that embodiments can be implemented in another order than the order illustrated or described in this application. In addition, terms "include" and "have" and any other variants thereof are intended to cover a non-exclusive inclusion. For example, a process, a method, a system, a product, or a device that includes a list of steps or modules is not necessarily limited to steps or modules expressly listed, but may include other steps or modules not expressly listed or inherent to such a process, method, product, or device. Names or numbers of steps in this application do not mean that steps in a method procedure need to be performed in a time/logical sequence indicated by the names or numbers. An execution sequence of procedure steps that have been named or numbered may be changed based on a technical objective to be achieved, provided that same or similar technical effects can be achieved. Division into units in this application is logical division, and there may be another division manner in actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

For ease of understanding, technical terms in embodiments of this application are first described below.

### (1) AI

AI is a theory, a method, a technology, and an application system in which human intelligence is simulated and extended by using a digital computer or a machine controlled by a digital computer, to perceive an environment, obtain knowledge, and achieve an optimal result by using the knowledge. In other words, AI is a comprehensive technology in computer science, and is intended to understand essence of intelligence and produce a new intelligent machine that can react in a manner similar to human intelligence. AI is to study design principles and implementation methods of various intelligent machines, so that the machines have functions of perception, inference, and decision-making.

### (2) AI model

The AI model is a technical means used to process a specific task in an AI technology. Generally, the AI model may be a neural network including neurons. Usually, the AI model is obtained through training on a device or platform (for example, a server, a virtual machine (virtual machine, VM), or a container (container)) of a model owner, and the trained AI model is stored in a form of a model file. When a device (for example, a terminal device, a server, an edge device, a VM, or a container) of a model user needs to use the AI model, the device of the model user may actively load the model file of the AI model, or the device of the model owner may actively send the model file of the AI model to the device of the model user, so that the device of the model user can load and execute the model file of the AI model.

The server is a physical machine. The VM or the container may be a virtual device obtained by dividing a hardware resource of a physical machine through virtualization.

The terminal device (which may also be referred to as user equipment (user equipment, UE)) is a device having a wireless transceiver function, and may be deployed on land, including indoors, outdoors, handheld, or vehicle-mounted, or may be deployed on water (for example, on a ship), or may be deployed in the air (for example, on an airplane, a balloon, or a satellite). For example, the terminal device may be, for example, a smartphone (mobile phone), a tablet computer (pad), a computer having a wireless transceiver function, an internet of things device, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home).

### (3) Computation graph

The computation graph is a manner of representing a mathematical function in a graph theory language, that is, of graphically representing a computation process. Generally, the computation graph is defined as a directed graph including nodes and edges. In the computation graph, each of an input value and a computation function appears in a form of a node, and a relationship between output terms of nodes is represented by a directed line segment (that is, an edge between the nodes).

### (4) Expression

The expression is a combination obtained by using a meaningful arrangement method that is of a number, an operator, a number grouping symbol (bracket), a free variable, a bound variable, and the like and that can be used to obtain a value. In simple terms, the expression is an expression including an operand and an operator, and is a computer instruction with a complete meaning. For example, the expression may be (x+6)*3*COS(1)/2*8+7.

### (5) Opaque predicate

The opaque predicate is an expression. A value of the opaque predicate is definitely known to a writer of the opaque predicate during execution at a point. However, a compiler or a static analyzer cannot infer the value, and the value of the opaque predicate can be determined only when the opaque predicate is run.

### (6) Trusted execution environment (Trusted Execution Environment, TEE)

The trusted execution environment is a secure zone constructed in a central processing unit by using software and hardware methods, to ensure that confidentiality and integrity of a program and data loaded in the trusted execution environment are protected. In simple terms, the trusted execution environment is a secure zone in the central processing unit. The central processing unit is configured to ensure that confidentiality and integrity of code and data in the trusted execution environment are protected, that is, the code and the data that are run in the trusted execution environment are confidential and cannot be tampered with.

### (7) Code obfuscation (obfuscated code)

Code obfuscation is also referred to as junk code, and is a behavior of converting code of a computer program into a form that is functionally equivalent but difficult to read and understand. Code obfuscation may be used for program source code and intermediate code obtained through program compilation. A program that performs code obfuscation is referred to as a code obfuscator.

In simple terms, code obfuscation may mean to rewrite names of various elements (for example, a variable, a function, and a class) in code into meaningless names. For example, an element in the code is rewritten into a single letter or a short meaningless combination of letters, or even is rewritten into a symbol such as __, so that a reader cannot guess a purpose of the element based on a name. Code obfuscation may further mean to rewrite some logic in code into a form that is functionally equivalent but more difficult to understand. For example, a for loop is rewritten into a while loop, a loop is rewritten into recursion, and an intermediate variable is simplified. Code obfuscation may further mean to scramble a format of code. For example, a space is deleted, a plurality of lines of code are squeezed into one line, or one line of code is broken into a plurality of lines.

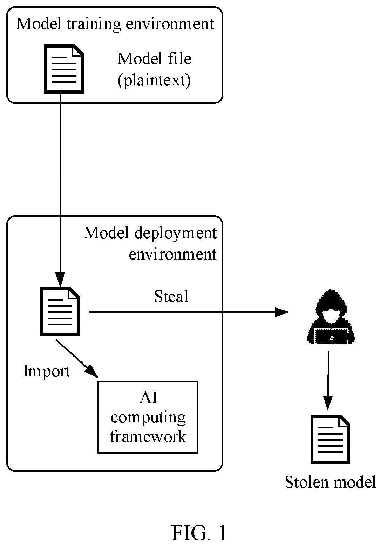

Currently, an AI service provider usually completes training and tuning of an AI model in a local model training environment, to obtain a model file corresponding to the AI model, and then deploys the AI model in a model deployment environment (for example, a terminal device) of a model user in a form of the model file. When the model file of the AI model is deployed in the model deployment environment in a plaintext form, the model file is prone to be stolen by a wrongdoer. For example, FIG. 1 is a diagram of deploying a model file in a plaintext form according to an embodiment of this application. As shown in FIG. 1, an AI service provider obtains an AI model through training in a model training environment, and generates a model file of the AI model. Then, the AI service provider deploys the plaintext model file in a model deployment environment, so that an AI computing framework in the model deployment environment can execute the AI model by importing the model file. However, because the model file is deployed in the model deployment environment in a plaintext form, a wrongdoer can directly steal the model file from the model deployment environment by attacking the model deployment environment, to obtain the stolen model.

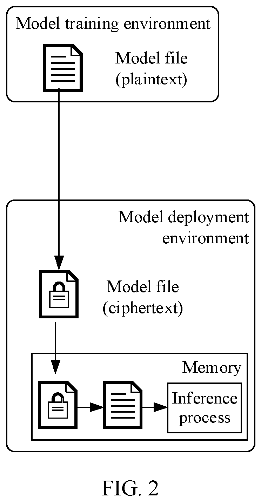

To resolve the problem that the AI model is prone to be stolen, some model confidentiality protection solutions are currently proposed in the industry. For example, FIG. 2 is a diagram of deploying a model file through encryption according to an embodiment of this application. As shown in FIG. 2, an AI service provider obtains an AI model through training in a model training environment, and generates a model file of the AI model. Then, the AI service provider encrypts the model file by using an encryption algorithm, and deploys an encrypted model file in a model deployment environment of a model user. When the model user needs to use the AI model, decryption of the model file is triggered through an application program, and the model file is decrypted into a memory, to execute the AI model in the memory.

In this solution shown as an example in FIG. 2, although confidentiality of the AI model can be protected, the entire AI model needs to be decrypted each time before inference of the AI model is performed, resulting in excessively high computing overheads. Consequently, an inference delay of the AI model is greatly prolonged, and application of the AI model is severely limited.

Based on this, embodiments of this application provide a model processing method. An obfuscation branch parallel to a computation branch in an AI model is added on the basis of original computation logic of the AI model, an execution relationship between the computation branch and the obfuscation branch is determined by using an expression, and a correct computation branch can be executed only when an output of the expression is correct. In this way, an explicit operator execution sequence and dependency relationship in the original model can be obscured by using the newly added obfuscation branch, to scramble a model structure. In addition, encrypted protection needs to be performed only on the newly added expression, to protect an entire normal execution procedure of the AI model, and reduce additional performance overheads caused by model protection, thereby facilitating promotion and application of the AI model.

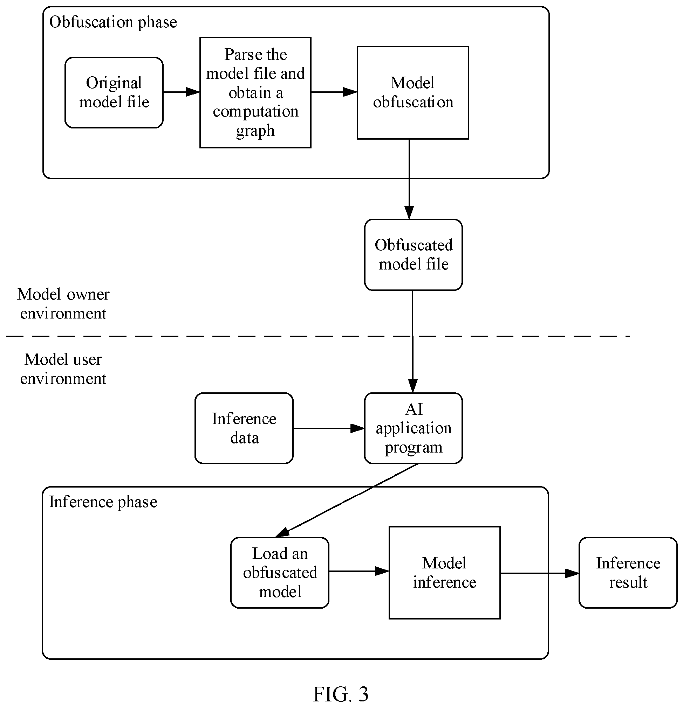

FIG. 3 is a diagram of an application scenario of a model processing method according to an embodiment of this application. As shown in FIG. 3, in a model obfuscation phase, an original model file is parsed to obtain a computation graph corresponding to the original model file. Then, the obtained computation graph is processed by using the model processing method provided in embodiments of this application, and an obfuscated model file is generated based on a processed computation graph. The obfuscated model file may be deployed in a model user environment. In this way, in a model inference phase, an AI application program can obtain the obfuscated model file and inference data, and load an obfuscated model. By performing the model-based data processing method provided in embodiments of this application, inference can be performed based on the obfuscated model, to obtain an inference result.

Specifically, both the model processing method and the model-based data processing method provided in embodiments of this application may be applied to an electronic device or a virtual device. The electronic device is, for example, the foregoing server and terminal device. The virtual device is, for example, the foregoing virtual machine and container.

For ease of understanding, the methods provided in embodiments of this application are sequentially described below from a model processing phase and a model use phase. In addition, for ease of description, the methods provided in embodiments of this application are described below by using an example in which the model processing phase is performed on the server and the model use phase is performed on the terminal device. In actual application, the model processing phase is not limited to being performed on the server, and the model use phase is not limited to being performed on the terminal device.

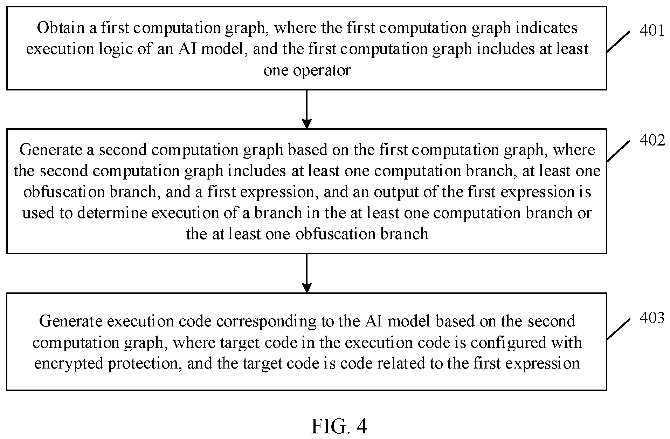

FIG. 4 is a schematic flowchart of a model processing method according to an embodiment of this application. As shown in FIG. 4, the model processing method includes the following steps 401 to 403.

Step 401: Obtain a first computation graph, where the first computation graph indicates execution logic of an AI model, and the first computation graph includes at least one operator.

In this embodiment, a server may obtain the first computation graph by parsing a model file of the AI model. The first computation graph may indicate some execution logic of the AI model, or the first computation graph may indicate all execution logic of the entire AI model.

Generally, the AI model includes a plurality of computing units, for example, various types of units configured to perform corresponding computation, such as a convolution unit, a pooling unit, or an addition unit. Each computing unit may be referred to as one operator. The execution logic of the AI model is an execution sequence of all the computing units and a dependency relationship between the computing units. Therefore, when a computation graph is used to represent the computing unit in the AI model and an input or output relationship between the computing units, the first computation graph can indicate the execution logic of the AI model.

Optionally, the first computation graph may include all or some operators in the AI model. In addition, there may be one or more types of operators in the first computation graph, and there may be one or more operators of a same type. A type of an operator usually represents a computation attribute of the operator, for example, a convolution type, a pooling type, an addition type, a batch normalization type, or a linear rectification type. An operator of the convolution type is an operator used to perform a convolution operation, an operator of the pooling type is an operator used to perform a pooling operation, an operator of the addition type is an operator used to perform an addition operation, an operator of the batch normalization type is an operator used to perform batch normalization, and an operator of the linear rectification type is an operator used to perform linear rectification. In addition, in the first computation graph, each operator has a unique identifier or a unique name, for example, a convolution operator 1, a convolution operator 2, a pooling operator 1, or an addition operator 1.

Optionally, before the server performs the method provided in this embodiment of this application, a user may specify an operator on which obfuscation protection needs to be performed in the AI model. For example, the user specifies one or more operators on which obfuscation protection needs to be performed in the AI model, or the user specifies one or more types of operators on which obfuscation protection needs to be performed in the AI model. In this way, when parsing the model file of the AI model, the server can determine the first computation graph based on the operator that is specified by the user and on which obfuscation protection needs to be performed. The first computation graph includes the operator on which obfuscation protection needs to be performed.

Step 402: Generate a second computation graph based on the first computation graph, where the second computation graph includes at least one computation branch, at least one obfuscation branch, and a first expression, an output of the first expression indicates to execute a branch in the at least one computation branch or the at least one obfuscation branch, the at least one operator is included in the at least one computation branch, and the at least one computation branch has different computation logic from the at least one obfuscation branch.

In this embodiment, in the second computation graph, the first expression may be connected to the at least one computation branch and the at least one obfuscation branch. In addition, in a process of executing the second computation graph, the first expression is first executed, and a branch in the at least one computation branch or the at least one obfuscation branch is selected for execution based on the output of the first expression. The at least one computation branch is executed only when the output of the first expression is a preset target value. The at least one obfuscation branch is executed when the output of the first expression is not a preset target value. The preset target value may include one or more values.

Specifically, the at least one operator in the first computation graph is included in the at least one computation branch in the second computation graph. Therefore, when the output of the first expression is the preset target value, the at least one computation branch in the second computation graph is executed, to ensure that actual computation logic is the same as computation logic of the original AI model; or when the output of the first expression is not the preset target value, the at least one obfuscation branch in the second computation graph is executed, so that actual computation logic is different from computation logic of the original AI model, to protect the AI model.

Step 403: Generate execution code corresponding to the AI model based on the second computation graph, where target code in the execution code is configured with encrypted protection, and the target code is code related to the first expression.

After obtaining the second computation graph, the server may generate the execution code corresponding to the AI model based on computation logic in the second computation graph, to deploy the AI model on another device. In the execution code generated by the server, the target code related to the first expression is configured with encrypted protection, and another part of code in the execution code may not be configured with encrypted protection.

In the second computation graph, the output of the first expression can affect an execution status between the computation branch and the obfuscation branch in the second computation graph. Therefore, the computation logic in the second computation graph can be protected by performing encrypted protection on the target code of the first expression. In simple terms, even if an attacker steals the AI model by stealing the execution code corresponding to the AI model, because encrypted protection is performed on the target code corresponding to the first expression, the attacker cannot obtain computation logic of the first expression, and therefore cannot obtain a correct output value, and cannot obtain correct execution logic of the AI model.

In this embodiment, an obfuscation branch parallel to the computation branch in the AI model is added on the basis of original computation logic of the AI model, an execution relationship between the computation branch and the obfuscation branch is determined by using an expression, and a correct computation branch can be executed only when an output of the expression is correct. In this way, an explicit operator execution sequence and dependency relationship in the original model can be obscured by using the newly added obfuscation branch, to scramble a model structure. In addition, encrypted protection needs to be performed only on the newly added expression, to protect an entire normal execution procedure of the AI model, and reduce additional performance overheads caused by model protection, thereby facilitating promotion and application of the AI model.

Optionally, there are a plurality of manners of configuring the target code related to the first expression with encrypted protection.

In a possible implementation, the target code related to the first expression is configured to be run in a trusted execution environment. When a terminal device of a model user needs to run the AI model, the terminal device loads the target code into the trusted execution environment for running, to implement encrypted protection on the target code based on the trusted execution environment.

It may be understood that because the trusted execution environment is a secure zone constructed in a central processing unit based on software and hardware methods, when the target code is configured to be run in the trusted execution environment, the terminal device of the model user needs to support the trusted execution environment, that is, there is a specific hardware requirement for the terminal device that needs to load the AI model.

In another possible implementation, the target code is configured to perform code obfuscation. In this way, when the target code is configured to perform code obfuscation, the target code is converted into code that has a same function but is difficult to read and understand, to protect the target code without affecting normal execution of the target code.

In another possible implementation, the target code is configured with encrypted protection by using an encryption algorithm. The encryption algorithm may be, for example, an advanced encryption standard (Advanced Encryption Standard, AES) algorithm, a data encryption standard (Data Encryption Standard, DES) algorithm, an international data encryption algorithm (International Data Encryption Algorithm, IDEA), and an RSA algorithm. A type of the encryption algorithm is not specifically limited in this embodiment. When the terminal device of the model user needs to run the AI model, the terminal device needs to first decrypt the target code by using a decryption algorithm, to obtain decrypted code, and then obtains the first expression based on the decrypted code.

In some examples, the server may alternatively perform encrypted protection on the target code related to the first expression by using all of the plurality of foregoing implementations. In simple terms, the target code is configured to be run in a trusted execution environment, and the target code is also configured with encrypted protection by using an encryption algorithm. In this way, when the terminal device of the model user needs to run the AI model, the terminal device may decrypt the target code in the trusted execution environment, to obtain decrypted code, and then obtain the first expression based on the decrypted code; or the terminal device may decrypt the target code, and run decrypted code in the trusted execution environment, to obtain the first expression.

In addition, in addition to performing encrypted protection on the target code related to the first expression, the first expression may be further protected. For example, the first expression may be an opaque predicate, and the server uses the opaque predicate as the first expression. In this way, when the target code corresponding to the first expression is obtained, a value of the first expression cannot be inferred by using the target code, and the value of the first expression can be obtained only in a process of running the target code, to implement hidden protection on the first expression.

A process of performing encrypted protection on the AI model by generating a new computation graph is described above. For ease of understanding, a specific process of generating a new computation graph based on an original computation graph of the AI model is described below in detail.

In this embodiment, the server generates the second computation graph based on the first computation graph in a plurality of manners.

Implementation 1: The server generates a second computation graph including one computation branch, at least one obfuscation branch, and the first expression.

The computation branch in the second computation graph includes the at least one operator in the first computation graph, and the output of the first expression indicates to execute one of the computation branch and the at least one obfuscation branch.

In simple terms, in the implementation 1, the computation branch in the second computation graph includes all operators in the first computation graph and a dependency relationship between all the operators. Therefore, computation logic in the first computation graph can be implemented by executing the computation branch in the second computation graph. In addition, the first expression may be separately connected to the computation branch and the at least one obfuscation branch, and indicates to execute any one of the computation branch and the at least one obfuscation branch. The computation branch in the second computation graph is executed only when the output of the first expression is correct. Otherwise, when the output of the first expression is incorrect, one of the at least one obfuscation branch in the second computation graph is executed.

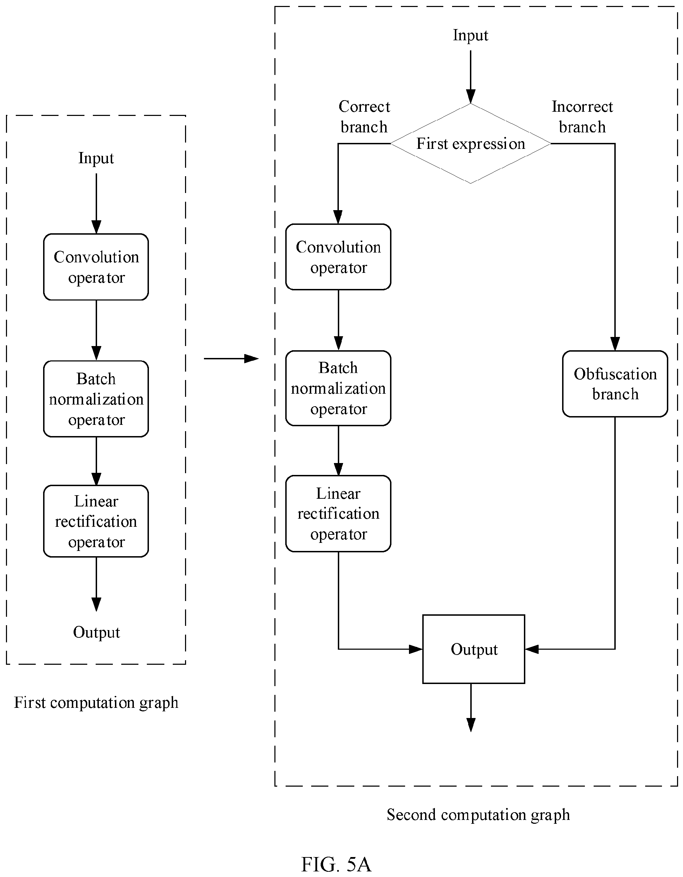

For example, FIG. 5A is a diagram of a structure of generating a second computation graph based on a first computation graph according to an embodiment of this application. As shown in FIG. 5A, the first computation graph includes three sequentially connected operators: a convolution operator, a batch normalization operator, and a linear rectification operator. An input to the convolution operator is an input to the first computation graph, an input to the batch normalization operator is an output of the convolution operator, an input to the linear rectification operator is an output of the batch normalization operator, and an output of the linear rectification operator is an output of the first computation graph. In the second computation graph generated based on the first computation graph, the convolution operator, the batch normalization operator, and the linear rectification operator that are sequentially connected become a computation branch in the second computation graph. The second computation graph further includes an obfuscation branch parallel to the computation branch, and both the computation branch and the obfuscation branch are connected to the first expression. In the second computation graph, a to-be-executed branch is determined based on an output value of the first expression. Specifically, when the output value of the first expression is the preset target value, the computation branch is executed, to implement computation logic shown in the first computation graph, so that an output of the second computation graph is the same as the output of the first computation graph; or when the output value of the first expression is not the preset target value, the obfuscation branch is executed, to implement computation logic different from that in the first computation graph, so that an output of the second computation graph is different from the output of the first computation graph.

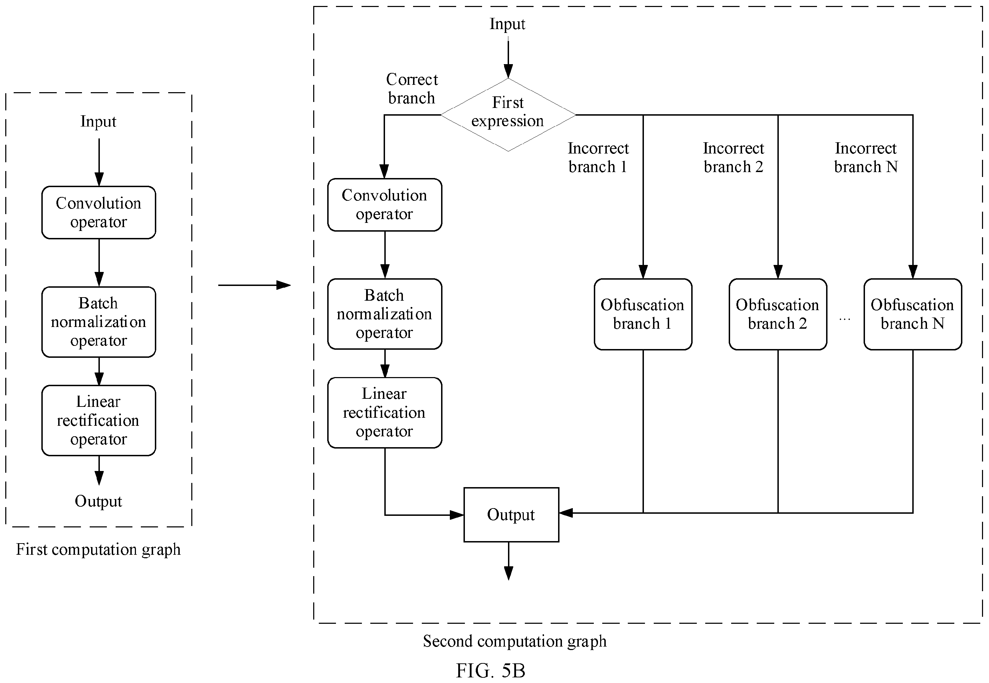

For example, FIG. 5B is another diagram of a structure of generating a second computation graph based on a first computation graph according to an embodiment of this application. As shown in FIG. 5B, the first computation graph in FIG. 5B is the same as the first computation graph shown in FIG. 5A. In addition, a computation branch in the second computation graph in FIG. 5B is the same as the computation branch in the first computation graph in FIG. 5A, and a difference lies in that the second computation graph in FIG. 5B includes a plurality of obfuscation branches: an obfuscation branch 1, an obfuscation branch 2, ..., and an obfuscation branch N. In the second computation graph shown in FIG. 5B, when the output of the first expression is a correct value, the computation branch is executed; when the output of the first expression is an incorrect value 1, the obfuscation branch 1 is executed; when the output of the first expression is an incorrect value 2, the obfuscation branch 2 is executed; or when the output of the first expression is an incorrect value N, the obfuscation branch N is executed.

In this solution, one or more obfuscation branches parallel to the computation branch are disposed in the second computation graph, so that an explicit operator execution sequence and dependency relationship in the original model can be effectively obscured, to scramble a model structure and improve confidentiality protection of the model.

Implementation 2: The server generates a second computation graph including a plurality of computation branches, at least one obfuscation branch, and the first expression.

The first expression is connected to the plurality of computation branches and the at least one obfuscation branch, and indicates to execute a plurality of branches in the plurality of computation branches and the at least one obfuscation branch in an orderly manner. When an output value of the first expression is the preset target value, the first expression indicates to execute the plurality of computation branches in an orderly manner; or when an output value of the first expression is not the preset target value, the first expression indicates to execute a plurality of other branches in an orderly manner or execute the plurality of computation branches in a disorderly manner. In conclusion, computation logic in the second computation graph is the same as computation logic in the first computation graph only when the output of the first expression is the preset target value; and when the output of the first expression is not the preset target value, the computation logic in the second computation graph is different from the computation logic in the first computation graph.

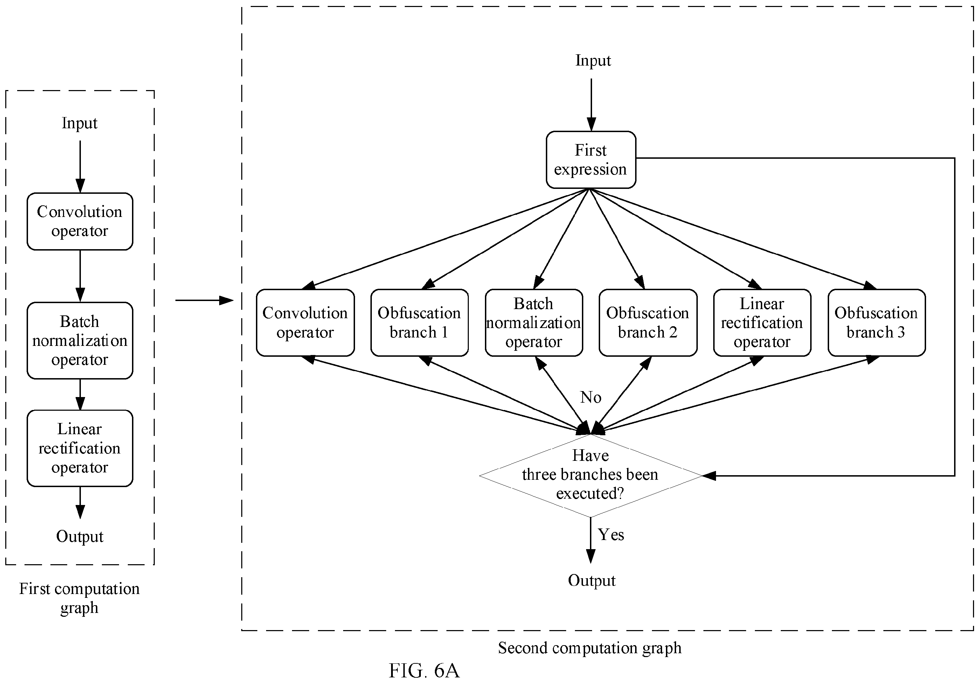

For example, FIG. 6A is another diagram of a structure of generating a second computation graph based on a first computation graph according to an embodiment of this application. As shown in FIG. 6A, the first computation graph in FIG. 6A is the same as the first computation graph shown in FIG. 5A. In addition, the second computation graph in FIG. 6A includes a plurality of computation branches and a plurality of obfuscation branches that are parallel, and each of the plurality of computation branches includes one operator. Specifically, in the second computation graph in FIG. 6A, six branches are sequentially arranged from left to right. A first branch is a computation branch including the convolution operator, a second branch is an obfuscation branch 1, a third branch is a computation branch including the batch normalization operator, a fourth branch is an obfuscation branch 2, a fifth branch is a computation branch including the linear rectification operator, and a sixth branch is an obfuscation branch 3. In addition, the six branches are further connected to a conditional expression, and the conditional expression is used to determine a quantity of executed branches. The conditional expression is connected to the first expression, and is used to determine, based on the output value of the first expression, a next branch that continues to be executed after one branch is executed each time.

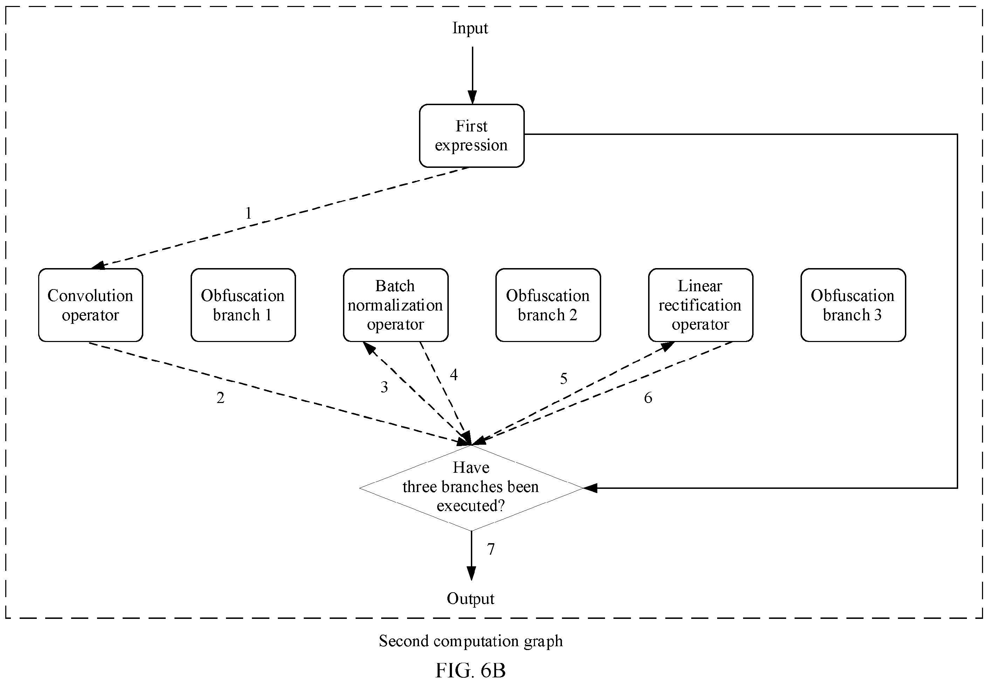

FIG. 6B is a diagram of running of a second computation graph according to an embodiment of this application. As shown in FIG. 6B, there are a total of seven execution steps for the second computation graph. Step 1: Run the first expression, and determine, based on the output value of the first expression, to execute the computation branch including the convolution operator. Step 2: Execute the convolution operator, and determine, based on the conditional expression, whether three branches have been executed. Step 3: The conditional expression determines, based on the output value of the first expression, that a second branch that needs to be executed is the computation branch including the batch normalization operator. Step 4: Execute the batch normalization operator, and determine, based on the conditional expression, whether three branches have been executed. Step 5: The conditional expression determines, based on the output value of the first expression, that a third branch that needs to be executed is the computation branch including the linear rectification operator. Step 6: Execute the linear rectification operator, and determine, based on the conditional expression, whether three branches have been executed. Step 7: The conditional expression outputs a result obtained by executing the linear rectification operator as an output value.

It may be learned from FIG. 6B that based on the second computation graph shown in FIG. 6A, the plurality of operators shown in the first computation graph can be executed in an orderly manner, so that computation logic in the second computation graph is the same as computation logic in the first computation graph.

In addition, when the output value of the first expression in FIG. 6A is an incorrect value, the computation logic in the second computation graph is not to sequentially execute the first branch, the third branch, and the fifth branch, so that the computation logic in the second computation graph is different from the computation logic in the first computation graph. For example, when the output value of the first expression is an incorrect value 1, the computation logic in the second computation graph may be to sequentially execute the second branch, the fourth branch, and the sixth branch. For another example, when the output value of the first expression is an incorrect value 2, the computation logic in the second computation graph may be to sequentially execute the second branch, the third branch, and the fourth branch.

Implementation 3: The server generates a second computation graph including a plurality of computation branches, at least one obfuscation branch, the first expression, and a second expression.

The output of the first expression indicates to execute one of the plurality of computation branches and the at least one obfuscation branch. The second expression is connected to the plurality of computation branches and the at least one obfuscation branch, and the second expression indicates a quantity of times the first expression is repeatedly executed. In addition, an input to the first expression is related to a branch executed last time.

Specifically, an input to the second expression is related to a branch executed last time, and an output of the second expression indicates whether to repeatedly execute the first expression.

In a process of executing the second computation graph, the first expression is run based on an input value, to obtain an output value of the first expression; and then a to-be-executed branch is determined based on the output value of the first expression. After the branch is executed, the second expression is executed to determine whether to continue to repeatedly execute the first expression. When it is determined to continue to repeat the first expression, the first expression continues to be executed based on an output value obtained through branch execution, to determine a next branch that needs to be executed. The foregoing steps are repeatedly performed until it is determined, based on an output value of the second expression, to terminate repetition of the first expression. In this way, the plurality of computation branches are sequentially executed, so that computation logic in the second computation graph is the same as computation logic in the first computation graph.

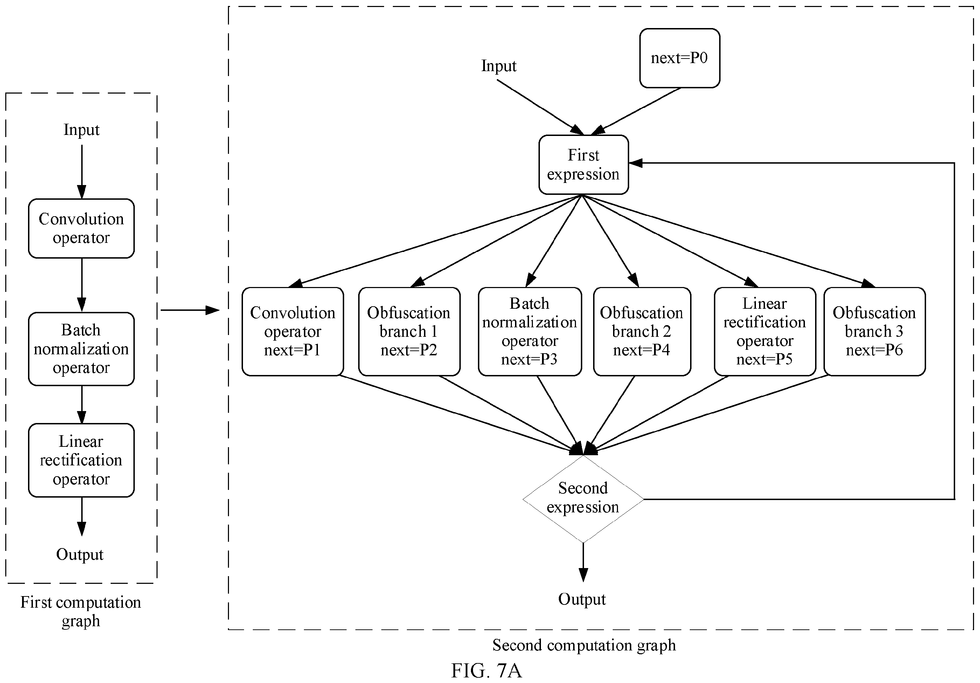

For example, FIG. 7A is another diagram of a structure of generating a second computation graph based on a first computation graph according to an embodiment of this application. As shown in FIG. 7A, the first computation graph in FIG. 7A is the same as the first computation graph shown in FIG. 5A. In addition, the second computation graph in FIG. 7A includes a plurality of computation branches and a plurality of obfuscation branches that are parallel, and each of the plurality of computation branches includes one operator. In addition, for each of the plurality of computation branches and the plurality of obfuscation branches, there are computation expressions (that is, expressions such as P1, P2, P3, P4, P5 and P6) in the branch, and these computation expressions are used to assign a value to a variable next. In addition, the first expression includes two inputs. One input is used as an input to a branch to be subsequently executed, the other input is the variable next, and the first expression is used to obtain a corresponding output based on a value of the variable next. The second expression determines, based on a value assigned to the variable next in a previous executed branch, whether to continue the first expression.

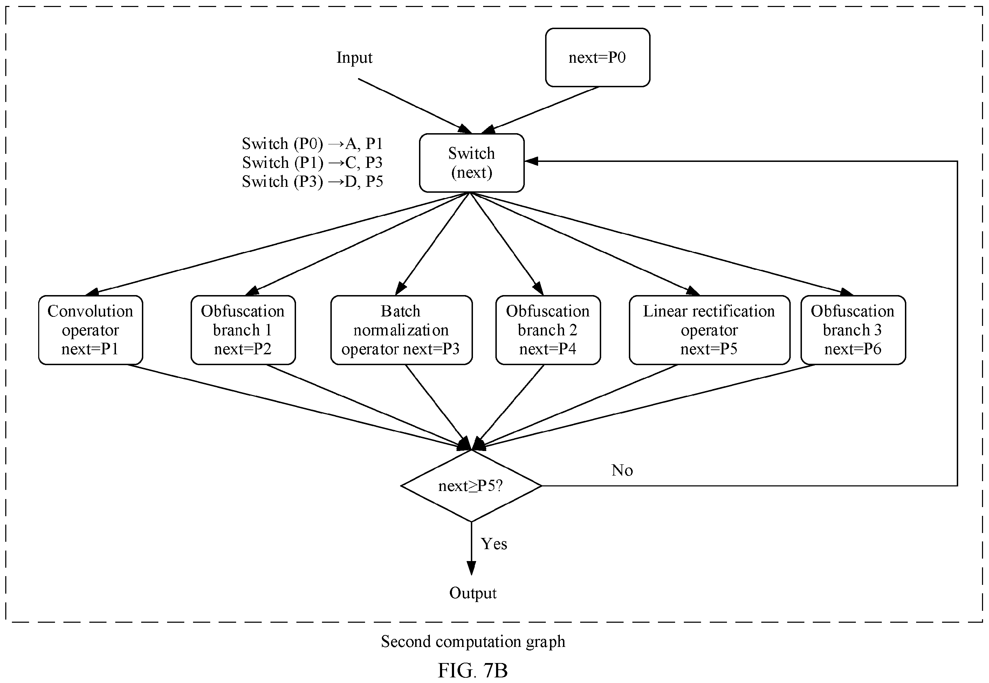

For example, FIG. 7B is a diagram of executing a second computation graph according to an embodiment of this application. As shown in FIG. 7B, the first expression is a switch (switch) operator, and is used to select a corresponding branch based on the value of the variable next. An initial input to the first expression is next=P0, and based on the initial input, the first expression chooses to execute a branch including the convolution operator.

When the branch including the convolution operator is executed, the branch assigns the value of the variable next to an output value of the expression P1. Values of the expression P1 to the expression P4 are less than a value of the expression P5, and a value of the expression P6 is greater than the value of the expression P5.

After execution of the branch including the convolution operator is completed, the second expression is executed, it is determined whether the value of next is greater than or equal to an output value of the expression P5, and based on the current value of next being less than the output value of the expression P5, it is chosen to repeatedly execute the first expression.

When the first expression is executed for the second time, the input to the first expression includes an output obtained after the convolution operator is executed and next=P1; and based on next=P1, the first expression chooses to execute a branch including the batch normalization operator, and the output obtained after the convolution operator is executed is used as an input to the batch normalization operator.

When the branch including the batch normalization operator is executed, the branch assigns the value of the variable next to an output value of the expression P3.

After execution of the branch including the batch normalization operator is completed, the second expression is executed, it is determined whether the value of next is greater than or equal to the output value of the expression P5, and based on the current value of next being less than the output value of the expression P5, it is chosen to repeatedly execute the first expression.

When the first expression is executed for the third time, the input to the first expression includes an output obtained after the batch normalization operator is executed and next=P3; and based on next=P3, the first expression chooses to execute a branch including the linear rectification operator, and the output obtained after the batch normalization operator is executed is used as an input to the linear rectification operator.

After execution of the branch including the linear rectification operator is completed, the second expression is executed, it is determined whether the value of next is greater than or equal to the output value of the expression P5, and based on the current value of next being equal to the output value of the expression P5, it is chosen to no longer repeatedly execute the first expression, to output an output value of the linear rectification operator.

In conclusion, in the second computation graph shown in FIG. 7B, the plurality of computation branches can be executed in an orderly manner through cooperation of the variable next, the first expression, and the second expression, so that computation logic in the second computation graph is the same as computation logic in the first computation graph.

In the implementation 1 and the implementation 2, an initial input to the first expression may include a first value, and the first value is configured with encrypted protection. That is, the initial input to the first expression may be fixed, and the first expression can output a correct value only when the initial input to the first expression is the first value, so that the computation logic in the second computation graph is the same as the computation logic in the first computation graph. In addition, the output of the first expression can be protected by configuring the first value with encrypted protection. Even if an attacker obtains the entire second computation graph, correct computation logic in the second computation graph cannot be obtained because a correct input value of the first expression cannot be obtained, thereby implementing confidentiality protection of the model.

In addition, the initial input to the first expression may further include an output of a computation expression, and the output of the computation expression is obtained by processing the first value. Similarly, the first expression can output a correct value only when an input to the computation expression is the first value.

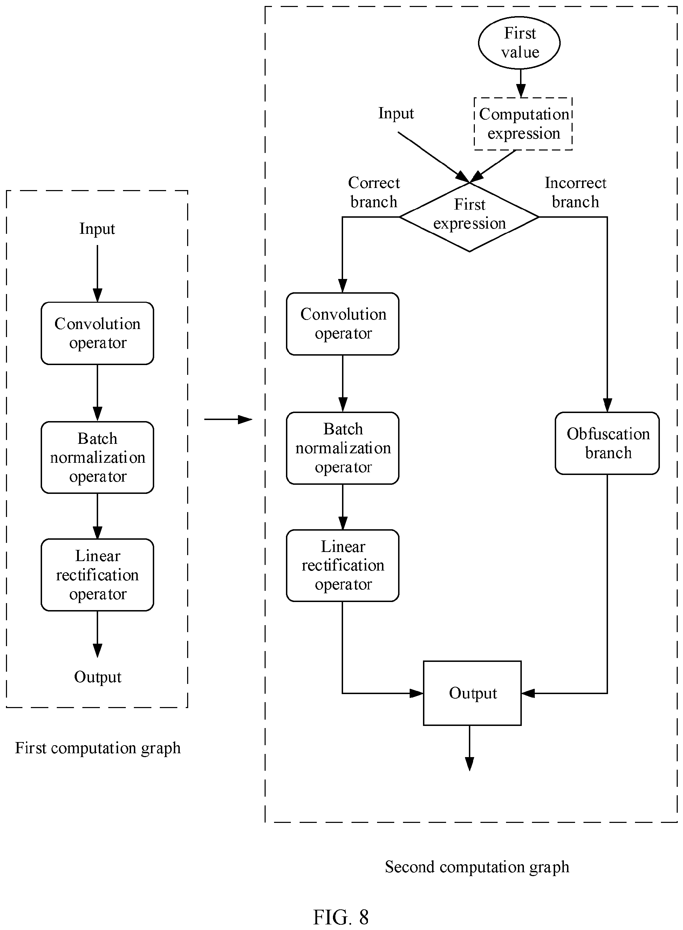

For example, the implementation 1 is used as an example, and the following describes, with reference to the accompanying drawings, a second computation graph when the input to the first expression further includes the first value. FIG. 8 is another diagram of a structure of generating a second computation graph based on a first computation graph according to an embodiment of this application. As shown in FIG. 8, the first computation graph in FIG. 8 is the same as the first computation graph shown in FIG. 5A. The second computation graph in FIG. 8 includes a computation branch and an obfuscation branch, and the first expression includes two inputs. One input is used as an input to the subsequent computation branch or obfuscation branch, and the other input is used as the input to the first expression. The other input may be the first value or an output value obtained by the computation expression based on the first value. Only when the input to the first expression is correct, and the input to the first expression is the first value or the input to the computation expression is the first value, the output of the first expression is the preset target value, that is, the computation branch in the second computation graph is executed. Otherwise, when the input to the first expression is not the first value or the input to the computation expression is not the first value, the output of the first expression is not the preset target value, and the obfuscation branch in the second computation graph is executed, so that the actual computation logic in the second computation graph is different from the computation logic in the first computation graph.

A manner of implementing confidentiality protection of the AI model by scrambling a structure of the AI model by generating the second computation graph is described above. A manner of protecting confidentiality of the AI model is described below from another perspective.

In this embodiment, the server may scramble and obfuscate a weight parameter of the operator in the AI model, to prevent an attacker from stealing the AI model by stealing each operator in the AI model.

For example, the server may obtain a third computation graph, where the third computation graph indicates the execution logic of the AI model, and the third computation graph includes a first operator. The third computation graph and the first computation graph may be two different computation graphs in the AI model. Alternatively, the third computation graph may be a computation subgraph of the first computation graph, that is, the first operator included in the third computation graph is one of a plurality of operators in the first computation graph.

A fourth computation graph is generated based on the third computation graph, where the fourth computation graph includes a second operator and a third expression, the second operator is obtained after a weight parameter of the first operator is modified, an input to the third expression includes an output of the second operator, and an output of the third expression is the same as an output when the first operator uses a same input as the second operator. That is, the server modifies the weight parameter of the first operator in the third computation graph, to obtain the second operator in the fourth computation graph. In addition, the server further inserts the third expression after the second operator, so that an output value obtained after the second operator and the third expression are combined can be the same as an output value of the first operator, that is, a computation result of the fourth computation graph and a computation result of the third computation graph are maintained unchanged.

In simple terms, when a weight parameter of the second operator is obtained by modifying the weight parameter of the first operator, based on a same input, an output of the second operator is definitely different from an output of the first operator. Therefore, the third expression is introduced to convert the output of the second operator into a value that is the same as the output of the first operator.

After obtaining the fourth computation graph, the server may generate the execution code corresponding to the AI model based on the second computation graph and the fourth computation graph.

Optionally, the weight parameter of the second operator is obtained after the weight parameter of the first operator is modified based on a second value, the input to the third expression includes the second value, and the second value is configured with encrypted protection. That is, only when the input to the third expression is the second value, the third expression can convert the output of the second operator to be the same as the output of the first operator. Otherwise, when the input to the third expression is not the second value, the third expression cannot convert the output of the second operator into a value that is the same as the output of the first operator.

A manner in which the second value is configured with encrypted protection may be the same as the manner, described in the foregoing embodiment, in which the first expression is configured with encrypted protection, that is, the second value is configured to be encrypted by using an encryption algorithm and/or be run in a trusted execution environment. For details, refer to the foregoing embodiment. Details are not described herein again.

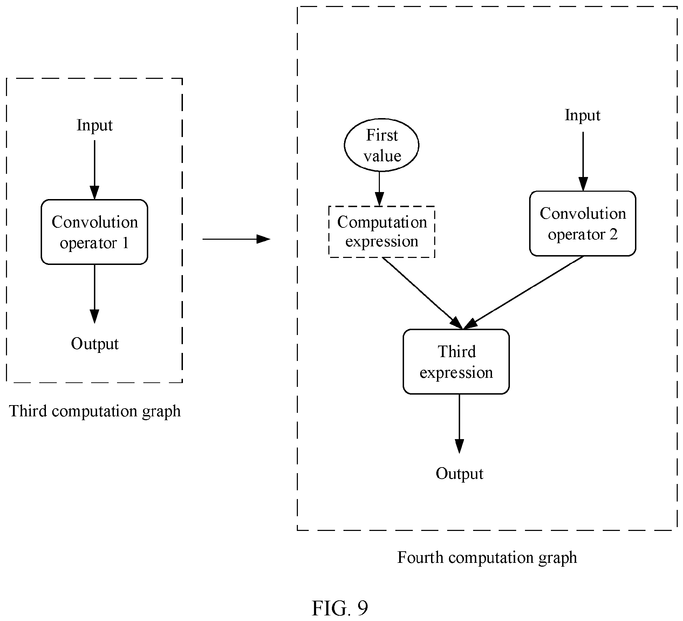

For example, FIG. 9 is a diagram of obtaining a fourth computation graph based on a third computation graph according to an embodiment of this application. As shown in FIG. 9, the third computation graph includes a convolution operator 1, and a computation formula of the convolution operator 1 is y=x*w+b, where y is an output value, x is an input value, and w and b are weight parameters. The fourth computation graph obtained based on the third computation graph includes a convolution operator 2 and the third expression. The convolution operator 2 is obtained after the weight parameter w in the convolution operator 1 is modified, and a computation formula of the convolution operator 2 is y=x*w'+b, where w'=w+r or w'=w+S(r), r is the first value, and S(r) is a value obtained after r is processed by using a computation expression. In addition, the input to the third expression includes an output of the convolution operator 2 and the first value or an output obtained after the first value is processed by using the computation expression. When an input to the convolution operator 1 is the same as an input to the convolution operator 2, the output of the third expression is the same as an output of the convolution operator 1. That is, if the third expression is D, for any input x, the following equation is met: D(r, x*w'+b)=x*w+b.

It may be learned from the foregoing example that when the first value input to the third expression is incorrect, the third expression cannot convert the output of the second operator into the output of the first operator. Therefore, computation logic in the fourth computation graph can be protected by performing encrypted protection on the first value, to protect an entire normal execution procedure of the AI model, and reduce additional performance overheads caused by model protection.

The model processing method provided in embodiments of this application is described above. A method for performing model-based data processing after an obfuscated model is obtained is described below.

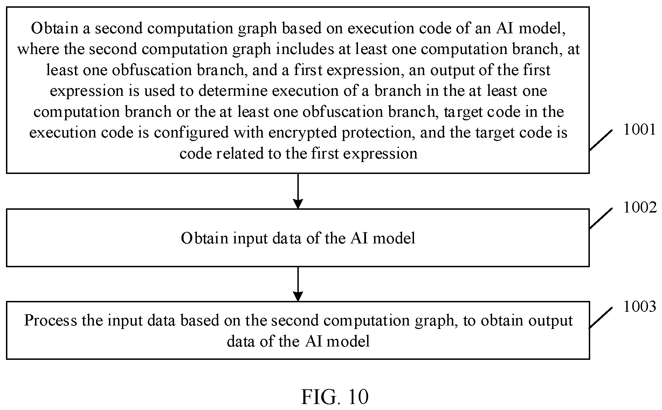

FIG. 10 is a schematic flowchart of a model-based data processing method according to an embodiment of this application. As shown in FIG. 10, the model-based data processing method includes the following steps 1001 to 1003.

Step 1001: Obtain a second computation graph based on execution code of an AI model, where the second computation graph includes at least one computation branch, at least one obfuscation branch, and a first expression, an output of the first expression indicates to execute a branch in the at least one computation branch or the at least one obfuscation branch, the at least one computation branch includes at least one operator in the AI model, the at least one computation branch has different computation logic from the at least one obfuscation branch, and target code related to the first expression in the execution code is configured with encrypted protection.

In this embodiment, the execution code of the AI model is obtained based on the model processing method in the embodiment corresponding to FIG. 4. Therefore, a terminal device can obtain the second computation graph by parsing the execution code of the AI model. The second computation graph in this embodiment is similar to the second computation graph in the embodiment corresponding to FIG. 4. For details, refer to the embodiment corresponding to FIG. 4. Details are not described herein again.

Step 1002: Obtain input data of the AI model.

The input data of the AI model is to-be-processed data. For example, if the AI model is an image processing model (for example, an image classification model or an image segmentation model), the input data of the AI model may be image data; or if the AI model is a speech processing model (for example, a speech recognition model), the input data of the AI model may be speech data. In conclusion, the input data of the AI model may be determined based on an actual type of the AI model. A type of the input data of the AI model is not limited in this embodiment.

Step 1003: Process the input data based on the second computation graph, to obtain output data of the AI model.

When obtaining the second computation graph, the terminal device may process the input data based on the second computation graph, to obtain the output data of the AI model. When the second computation graph is a partial computation graph in the AI model, the terminal device may further process the input data based on the second computation graph and another computation graph, to obtain the output data of the AI model.

In a possible implementation, the second computation graph includes only one computation branch; and the output of the first expression indicates to execute one of the computation branch and the at least one obfuscation branch.

In a possible implementation, the second computation graph includes a plurality of computation branches, and the second computation graph further includes a second expression; the output of the first expression indicates to execute one of the plurality of computation branches and the at least one obfuscation branch; and the second expression is connected to the plurality of computation branches and the at least one obfuscation branch, the second expression indicates a quantity of times the first expression is repeatedly executed, and an input to the first expression is related to a branch executed last time.

In a possible implementation, an input to the second expression is related to a branch executed last time, and an output of the second expression indicates whether to repeatedly execute the first expression.

In a possible implementation, an initial input to the first expression includes a first value, and the first value is configured with encrypted protection.

In a possible implementation, the target code is configured to be run in a trusted execution environment; and the obtaining a second computation graph based on execution code of an AI model includes: The terminal device runs the target code in the trusted execution environment, to obtain the first expression in the second computation graph.

In a possible implementation, the target code is configured with encrypted protection by using an encryption algorithm; the terminal device may decrypt the target code in the execution code to obtain decrypted code; and the terminal device executes the decrypted code to obtain the first expression.

In a possible implementation, the method further includes: obtaining a fourth computation graph based on the execution code of the AI model, where the fourth computation graph includes a second operator and a third expression, the second operator is obtained after a weight parameter of a first operator in the AI model is modified, an input to the third expression includes an output of the second operator, and an output of the third expression is the same as an output when the first operator uses a same input as the second operator; and the processing the input data based on the second computation graph includes: processing the input data based on the second computation graph and the fourth computation graph.

In a possible implementation, a weight parameter of the second operator is obtained after the weight parameter of the first operator is modified based on a second value, the input to the third expression includes the second value, and the second value is configured with encrypted protection.

For ease of understanding, the model processing method and the model-based data processing method provided in embodiments of this application are described below with reference to a specific example.

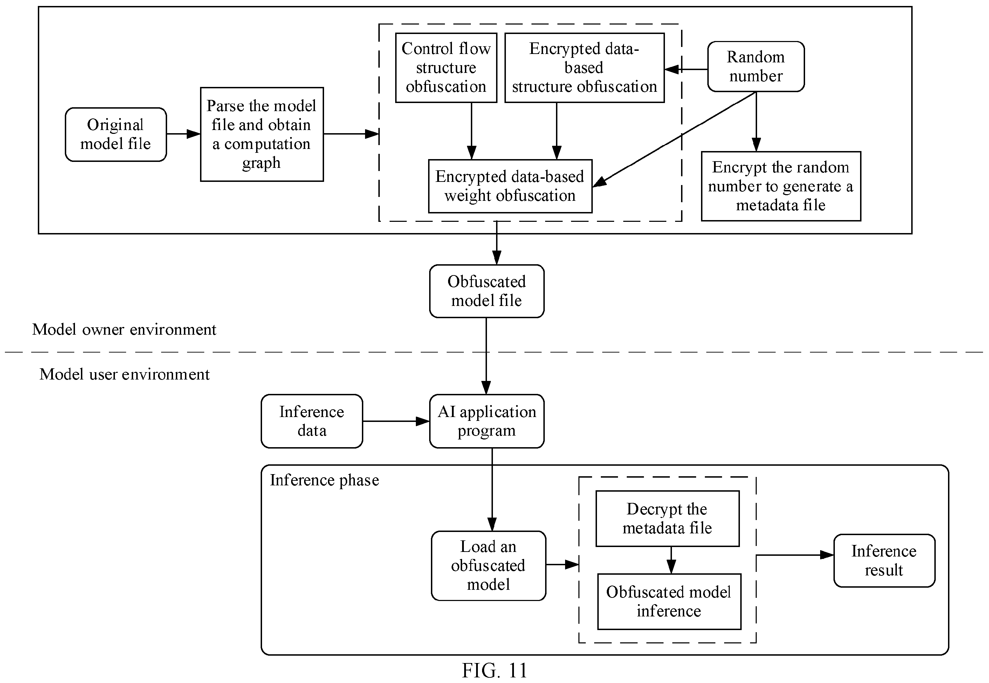

FIG. 11 is a schematic flowchart of model processing and model-based data processing according to an embodiment of this application.

In a model obfuscation phase, an original model file is parsed to obtain a computation graph corresponding to the original model file. Then, control flow structure obfuscation, encrypted data-based structure obfuscation, and/or encrypted data-based model weight obfuscation are/is performed on the obtained computation graph by using the model processing method provided in embodiments of this application, to obtain an obfuscated model file.

Control flow structure obfuscation means to add an obfuscation branch to obscure an explicit operator execution sequence and dependency relationship in the computation graph, so as to hide true computation logic of a model. A manner of adding the obfuscation branch is described in the embodiments corresponding to FIG. 5A to FIG. 7B. A server generates a fake subgraph corresponding to a to-be-protected computation subgraph, and establishes a switch operator structure with reference to a user-defined opaque predicate expression (that is, the foregoing first expression). One branch of the switch operator structure is the to-be-protected computation subgraph, and the other branch is the fake subgraph or the expression, to obscure a dependency relationship between operators. Alternatively, a specific quantity of fake subgraphs and a computation expression used to determine branch selection are generated for a to-be-protected computation subgraph, a switch operator is used to insert the to-be-protected computation subgraph and the fake subgraph into each switch branch, and an execution sequence of branches is controlled by using the computation expression and a user-defined opaque predicate, to hide an execution sequence of model operators.

Encrypted data-based structure obfuscation means to obfuscate a model structure based on encrypted data, as specifically described in the embodiment corresponding to FIG. 8. Specifically, the server generates a corresponding fake subgraph and computation expression for the to-be-protected computation subgraph. An externally generated random number is introduced and the random number is passed into the computation expression as an input condition, to determine an execution branch of a control flow structure. During inference, an obfuscated model can output a correct result only when a correct random number is passed in, to prevent the model from being stolen.

Encrypted data-based model weight obfuscation means to scramble, by introducing externally generated random noise, each weight that needs to be protected. Different random noise may be used for scrambling each weight. To ensure that weight scrambling does not affect correctness of a model execution result, a newly constructed subgraph (that is, the third expression in the foregoing embodiment) needs to be added after an operator whose weight is scrambled, and the random noise and a result of the operator whose weight is scrambled are passed into the newly constructed subgraph. The newly constructed subgraph may restore an unscrambled output of the protected operator, so that weight scrambling does not affect accuracy of the model execution result.

In the model obfuscation phase, because a random number is used in a model obfuscation process, the random number may be further encrypted to generate a metadata file.

After model obfuscation is completed, the obfuscated model file and the corresponding encrypted metadata file are deployed on a terminal device.

In a model inference phase, the terminal device loads and parses the obfuscated model file to obtain a computation graph of an AI model. Then, the terminal device decrypts the metadata file to obtain a random number set. A decryption process may be performed in a trusted execution environment. After obtaining the random number set through decryption, the terminal device traverses and executes all computing units in a task sequence based on inference data input by an AI application program and a decrypted random number, and directly performs obfuscated model inference, to obtain an inference result.

The methods provided in embodiments of this application are described above. For ease of understanding, apparatuses configured to perform the methods in the foregoing embodiments are described below.

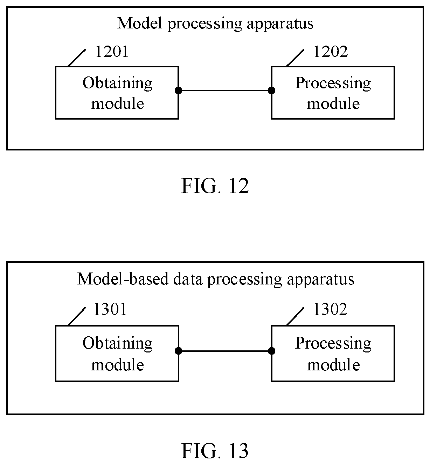

FIG. 12 is a diagram of a structure of a model processing apparatus according to an embodiment of this application. As shown in FIG. 12, the model processing apparatus includes: an obtaining module 1201, configured to obtain a first computation graph, where the first computation graph indicates execution logic of an AI model, and the first computation graph includes at least one operator; and a processing module 1202, configured to generate a second computation graph based on the first computation graph, where the second computation graph includes at least one computation branch, at least one obfuscation branch, and a first expression, an output of the first expression indicates to execute a branch in the at least one computation branch or a branch in the at least one obfuscation branch, the at least one operator is included in the at least one computation branch, and the at least one computation branch has different computation logic from the at least one obfuscation branch. The processing module 1202 is configured to generate execution code corresponding to the AI model based on the second computation graph, where target code related to the first expression in the execution code is configured with encrypted protection.

In a possible implementation, the second computation graph includes only one computation branch; and the output of the first expression indicates to execute one of the computation branch and the at least one obfuscation branch.

In a possible implementation, the second computation graph includes a plurality of computation branches, and the second computation graph further includes a second expression; the output of the first expression indicates to execute one of the plurality of computation branches and the at least one obfuscation branch; and the second expression is connected to the plurality of computation branches and the at least one obfuscation branch, the second expression indicates a quantity of times the first expression is repeatedly executed, and an input to the first expression is related to a branch executed last time.

In a possible implementation, an input to the second expression is related to a branch executed last time, and an output of the second expression indicates whether to repeatedly execute the first expression.

In a possible implementation, an initial input to the first expression includes a first value, and the first value is configured with encrypted protection.

In a possible implementation, the target code is configured to be run in a trusted execution environment.

In a possible implementation, the target code is configured with encrypted protection by using an encryption algorithm.

In a possible implementation, the obtaining module 1201 is further configured to obtain a third computation graph, where the third computation graph indicates the execution logic of the AI model, and the third computation graph includes a first operator; and the processing module 1202 is further configured to: generate a fourth computation graph based on the third computation graph, where the fourth computation graph includes a second operator and a third expression, the second operator is obtained after a weight parameter of the first operator is modified, an input to the third expression includes an output of the second operator, and an output of the third expression is the same as an output when the first operator uses a same input as the second operator; and generate the execution code corresponding to the AI model based on the second computation graph and the fourth computation graph.

In a possible implementation, a weight parameter of the second operator is obtained after the weight parameter of the first operator is modified based on a second value, the input to the third expression includes the second value, and the second value is configured with encrypted protection.

FIG. 13 is a diagram of a structure of a model-based data processing apparatus according to an embodiment of this application. As shown in FIG. 13, the model-based data processing apparatus includes: an obtaining module 1301, configured to obtain a second computation graph based on execution code of an AI model, where the second computation graph includes at least one computation branch, at least one obfuscation branch, and a first expression, an output of the first expression indicates to execute a branch in the at least one computation branch or a branch in the at least one obfuscation branch, the at least one computation branch includes at least one operator in the AI model, the at least one computation branch has different computation logic from the at least one obfuscation branch, and target code related to the first expression in the execution code is configured with encrypted protection, where the obtaining module 1301 is further configured to obtain input data of the AI model; and a processing module 1302, further configured to process the input data based on the second computation graph, to obtain output data of the AI model.

In a possible implementation, the second computation graph includes only one computation branch; and the output of the first expression indicates to execute one of the computation branch and the at least one obfuscation branch.

In a possible implementation, the second computation graph includes a plurality of computation branches, and the second computation graph further includes a second expression; the output of the first expression indicates to execute one of the plurality of computation branches and the at least one obfuscation branch; and the second expression is connected to the plurality of computation branches and the at least one obfuscation branch, the second expression indicates a quantity of times the first expression is repeatedly executed, and an input to the first expression is related to a branch executed last time.

In a possible implementation, an input to the second expression is related to a branch executed last time, and an output of the second expression indicates whether to repeatedly execute the first expression.

In a possible implementation, an initial input to the first expression includes a first value, and the first value is configured with encrypted protection.

In a possible implementation, the target code is configured to be run in a trusted execution environment, and/or the target code is configured to perform code obfuscation.

In a possible implementation, the target code is configured with encrypted protection by using an encryption algorithm; and the processing module 1302 is further configured to: decrypt the target code in the execution code to obtain decrypted code; and execute the decrypted code to obtain the first expression.

In a possible implementation, the obtaining module 1301 is further configured to obtain a fourth computation graph based on the execution code of the AI model, where the fourth computation graph includes a second operator and a third expression, the second operator is obtained after a weight parameter of a first operator in the AI model is modified, an input to the third expression includes an output of the second operator, and an output of the third expression is the same as an output when the first operator uses a same input as the second operator; and the processing module 1302 is further configured to process the input data based on the second computation graph and the fourth computation graph.

In a possible implementation, a weight parameter of the second operator is obtained after the weight parameter of the first operator is modified based on a second value, the input to the third expression includes the second value, and the second value is configured with encrypted protection.

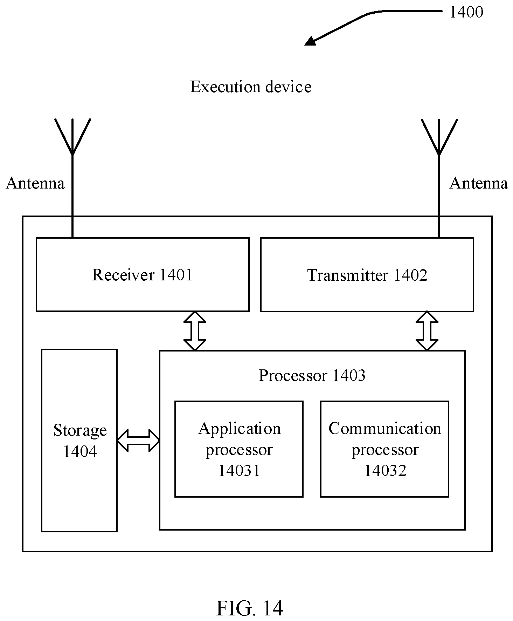

An execution device provided in an embodiment of this application is described below. FIG. 14 is a diagram of a structure of an execution device according to an embodiment of this application. The execution device 1400 may be specifically represented as a mobile phone, a tablet computer, a notebook computer, a smart wearable device, a server, or the like. This is not limited herein. Specifically, the execution device 1400 includes a receiver 1401, a transmitter 1402, a processor 1403, and a storage 1404 (there may be one or more processors 1403 in the execution device 1400, and one processor is used as an example in FIG. 14). The processor 1403 may include an application processor 14031 and a communication processor 14032. In some embodiments of this application, the receiver 1401, the transmitter 1402, the processor 1403, and the storage 1404 may be connected through a bus or in another manner.

The storage 1404 may include a read-only memory and a random access memory, and provide instructions and data to the processor 1403. A part of the storage 1404 may further include a non-volatile random access memory (non-volatile random access memory, NVRAM). The storage 1404 stores a processor and operation instructions, an executable module or a data structure, a subset thereof, or an extended set thereof. The operation instructions may include various operation instructions for implementing various operations.

The processor 1403 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1403 or may be implemented by the processor 1403. The processor 1403 may be an integrated circuit chip and has a signal processing capability. In an implementation process, the steps in the foregoing methods may be implemented by using an integrated logic circuit of hardware in the processor 1403 or by using instructions in a form of software. The processor 1403 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the storage 1404, and the processor 1403 reads information in the storage 1404 and completes the steps in the foregoing methods in combination with the hardware in the processor 1403.

The receiver 1401 may be configured to: receive input digital or character information, and generate a signal input related to a related setting and function control of the execution device. The transmitter 1402 may be configured to output digital or character information through a first interface. The transmitter 1402 may be further configured to send instructions to a disk group through the first interface, to modify data in the disk group. The transmitter 1402 may further include a display device, for example, a display.

In this embodiment of this application, in a case, the processor 1403 is configured to perform the method in the embodiment corresponding to FIG. 4 or FIG. 10.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the model hyperparameter selection method described in the foregoing embodiments, or a chip in a training device performs the model hyperparameter selection method described in the foregoing embodiments. Optionally, the storage unit is a storage unit in the chip, for example, a register or a buffer. The storage unit may alternatively be a storage unit that is in a wireless access device and that is outside the chip, for example, a read-only memory (read-only memory, ROM) or another type of static storage device that can store static information and instructions, or a random access memory (random access memory, RAM).

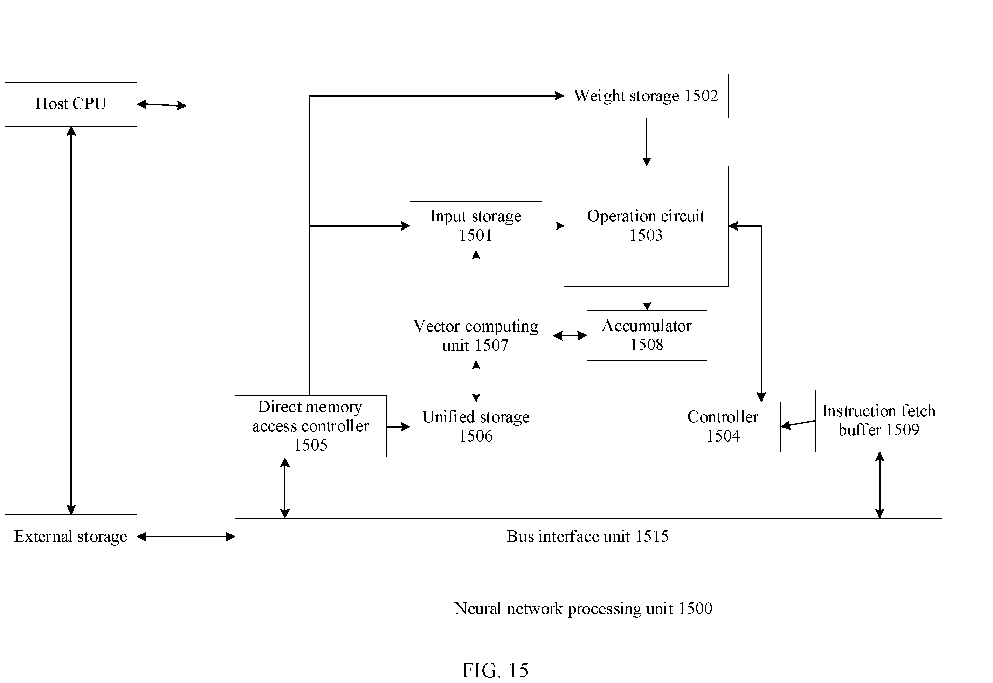

Specifically, FIG. 15 is a diagram of a structure of a chip according to an embodiment of this application. The chip may be represented as a neural network processing unit NPU 1500. The NPU 1500 is connected to a host CPU (Host CPU) as a coprocessor, and the host CPU allocates a task. A core part of the NPU is an operation circuit 1503, and a controller 1504 controls the operation circuit 1503 to extract matrix data in a storage and perform a multiplication operation.

In some implementations, the operation circuit 1503 internally includes a plurality of processing units (Process Engine, PE). In some implementations, the operation circuit 1503 is a two-dimensional systolic array. The operation circuit 1503 may alternatively be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches corresponding data of the matrix B from a weight storage 1502, and buffers the data on each PE in the operation circuit. The operation circuit fetches data of the matrix A from an input storage 1501 to perform a matrix operation on the matrix B, and stores an obtained partial result or an obtained final result of the matrix in an accumulator (accumulator) 1508.

A unified storage 1506 is configured to store input data and output data. Weight data is directly transferred to the weight storage 1502 by using a direct memory access controller (Direct Memory Access Controller, DMAC) DMAC 1505. The input data is also transferred to the unified storage 1506 by using the DMAC.

A BIU is a bus interface unit, namely, a bus interface unit 1515, and is used for interaction between an AXI bus and each of the DMAC and an instruction fetch buffer (Instruction Fetch Buffer, IFB) 1509.

The bus interface unit (Bus Interface Unit, BIU for short) 1515 is used by the instruction fetch buffer 1509 to obtain instructions from an external storage, and is further used by the direct memory access controller 1505 to obtain original data of the input matrix A or the weight matrix B from the external storage.

The DMAC is mainly configured to transfer input data in the external storage DDR to the unified storage 1506, transfer weight data to the weight storage 1502, or transfer input data to the input storage 1501.

A vector computing unit 1507 includes a plurality of operation processing units, performs further processing such as vector multiplication, vector addition, an exponential operation, a logarithmic operation, or value comparison on an output of the operation circuit 1503 if necessary, and is mainly configured to perform network computation at a non-convolutional/fully connected layer in a neural network, for example, batch normalization (batch normalization), pixel-wise summation, and upsampling a feature map.

In some implementations, the vector computing unit 1507 can store a processed output vector in the unified storage 1506. For example, the vector computing unit 1507 may apply a linear function or a nonlinear function to the output of the operation circuit 1503, for example, perform linear interpolation on a feature map extracted by a convolutional layer, and for another example, obtain a vector of accumulated values to generate an activation value. In some implementations, the vector computing unit 1507 generates a normalized value, a pixel-wise summation value, or a combination thereof. In some implementations, the processed output vector can be used as an activation input to the operation circuit 1503, for example, used at a subsequent layer in the neural network.

The instruction fetch buffer (instruction fetch buffer) 1509 connected to the controller 1504 is configured to store instructions used by the controller 1504.

All of the unified storage 1506, the input storage 1501, the weight storage 1502, and the instruction fetch buffer 1509 are on-chip storages. The external storage is private to a hardware architecture of the NPU.

Any processor described above may be a general-purpose central processing unit, a microprocessor, an ASIC, or one or more integrated circuits for controlling program execution.

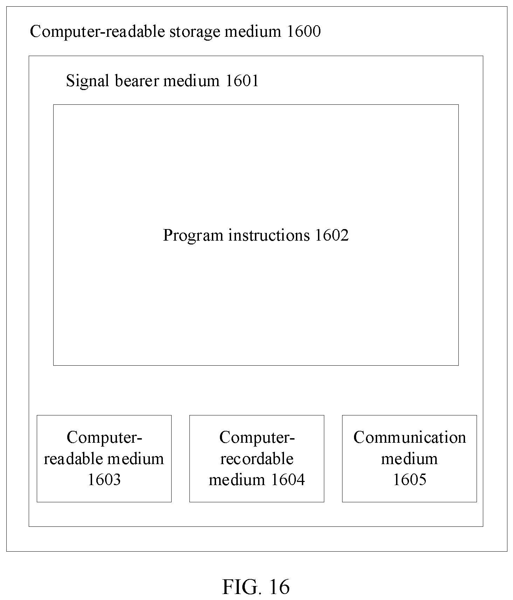

FIG. 16 is a diagram of a structure of a computer-readable storage medium according to an embodiment of this application. This application further provides a computer-readable storage medium. In some embodiments, the method disclosed in FIG. 4 or FIG. 10 may be implemented as computer program instructions encoded in a machine-readable format on the computer-readable storage medium or encoded on another non-transitory medium or product.

FIG. 16 shows an example of a conceptual partial view of an example computer-readable storage medium arranged according to at least some embodiments shown herein. The example computer-readable storage medium includes a computer program for executing a computer process on a computing device.

In an embodiment, a computer-readable storage medium 1600 is provided by using a signal bearer medium 1601. The signal bearer medium 1601 may include one or more program instructions 1602. When the one or more program instructions 1602 are run by one or more processors, the functions or some of the functions described in FIG. 4 or FIG. 10 may be provided. In addition, the program instructions 1602 in FIG. 16 are also described as example instructions.

In some examples, the signal bearer medium 1601 may include a computer-readable medium 1603, for example, but not limited to, a hard disk drive, a compact disc (CD), a digital video disc (DVD), a digital tape, a storage, a ROM, or a RAM.

In some implementations, the signal bearer medium 1601 may include a computer-recordable medium 1604, for example, but not limited to, a storage, a read/write (R/W) CD, and an R/W DVD. In some implementations, the signal bearer medium 1601 may include a communication medium 1605, for example, but not limited to, a digital and/or analog communication medium (for example, an optical fiber cable, a waveguide, a wired communication link, or a wireless communication link). Therefore, for example, the signal bearer medium 1601 may be conveyed by a wireless communication medium 1605 (for example, a wireless communication medium that complies with the IEEE 802.16 standard or another transmission protocol).

The one or more program instructions 1602 may be, for example, computer-executable instructions or logic implementation instructions. In some examples, a computing device may be configured to provide various operations, functions, or actions in response to the program instructions 1602 transmitted to the computing device by using one or more of the computer-readable medium 1603, the computer-recordable medium 1604, and/or the communication medium 1605.

In addition, it should be noted that the described apparatus embodiment is merely an example. The units described as separate parts may or may not be physically separate, and parts displayed as units may or may not be physical units, may be located at one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or certainly, may be implemented by dedicated hardware, including an application-specific integrated circuit, a dedicated CPU, a dedicated storage, a dedicated component, and the like. Generally, any function performed by a computer program can be easily implemented by using corresponding hardware. In addition, a specific hardware structure used to achieve a same function may be in various forms, for example, in a form of an analog circuit, a digital circuit, or a dedicated circuit. However, for this application, software program implementation is a better implementation in most cases. Based on such an understanding, the technical solutions of this application essentially, or the part contributing to the conventional technology may be implemented in a form of a software product. The computer software product is stored in a readable storage medium, for example, a floppy disk of a computer, a USB flash drive, a removable hard disk, a ROM, a RAM, a magnetic disk, or an optical disc, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used for implementation, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored in a computer, or a data storage device, for example, a training device or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A model processing method, comprising:
obtaining a first computation graph, wherein the first computation graph indicates execution logic of an artificial intelligence AI model, and the first computation graph comprises at least one operator;
generating a second computation graph based on the first computation graph, wherein the second computation graph comprises at least one computation branch, at least one obfuscation branch, and a first expression, an output of the first expression indicates to execute a branch in the at least one computation branch or a branch in the at least one obfuscation branch, the at least one operator is comprised in the at least one computation branch, and the at least one computation branch has different computation logic from the at least one obfuscation branch; and
generating execution code corresponding to the AI model based on the second computation graph, wherein target code in the execution code is configured with encrypted protection, and the target code is code related to the first expression.

2. The method according to claim 1, wherein the second computation graph comprises only one computation branch; and
the output of the first expression indicates to execute one of the computation branch and the at least one obfuscation branch.

3. The method according to claim 1, wherein the second computation graph comprises a plurality of computation branches, and the second computation graph further comprises a second expression;
the output of the first expression indicates to execute one of the plurality of computation branches and the at least one obfuscation branch; and
the second expression is connected to the plurality of computation branches and the at least one obfuscation branch, and the second expression indicates a quantity of times the first expression is repeatedly executed.

4. The method according to claim 3, wherein an input to the second expression is related to a branch executed last time, and an output of the second expression is used to determine whether to repeatedly execute the first expression.

5. The method according to any one of claims 1 to 4, wherein an initial input to the first expression comprises a first value, and the first value is configured with encrypted protection.

6. The method according to any one of claims 1 to 5, wherein the target code is configured to be run in a trusted execution environment, and/or the target code is configured to perform code obfuscation.

7. The method according to any one of claims 1 to 6, wherein the target code is configured with encrypted protection by using an encryption algorithm.

8. The method according to any one of claims 1 to 7, wherein the method further comprises:
obtaining a third computation graph, wherein the third computation graph indicates the execution logic of the AI model, and the third computation graph comprises a first operator; and
generating a fourth computation graph based on the third computation graph, wherein the fourth computation graph comprises a second operator and a third expression, the second operator is obtained after a weight parameter of the first operator is modified, an input to the third expression comprises an output of the second operator, and an output of the third expression is the same as an output when the first operator uses a same input as the second operator; and
the generating execution code corresponding to the AI model based on the second computation graph comprises:
generating the execution code corresponding to the AI model based on the second computation graph and the fourth computation graph.

9. The method according to claim 8, wherein a weight parameter of the second operator is obtained after the weight parameter of the first operator is modified based on a second value, the input to the third expression comprises the second value, and the second value is configured with encrypted protection.

10. A model-based data processing method, comprising:
obtaining a second computation graph based on execution code of an AI model, wherein the second computation graph comprises at least one computation branch, at least one obfuscation branch, and a first expression, an output of the first expression indicates to execute a branch in the at least one computation branch or a branch in the at least one obfuscation branch, the at least one computation branch comprises at least one operator in the AI model, the at least one computation branch has different computation logic from the at least one obfuscation branch, target code in the execution code is configured with encrypted protection, and the target code is code related to the first expression;
obtaining input data of the AI model; and
processing the input data based on the second computation graph, to obtain output data of the AI model.

11. The method according to claim 10, wherein the second computation graph comprises only one computation branch; and
the output of the first expression indicates to execute one of the computation branch and the at least one obfuscation branch.

12. The method according to claim 10, wherein the second computation graph comprises a plurality of computation branches, and the second computation graph further comprises a second expression;
the output of the first expression indicates to execute one of the plurality of computation branches and the at least one obfuscation branch; and
the second expression is connected to the plurality of computation branches and the at least one obfuscation branch, and the second expression indicates a quantity of times the first expression is repeatedly executed.

13. The method according to claim 12, wherein an input to the second expression is related to a branch executed last time, and an output of the second expression is used to determine whether to repeatedly execute the first expression.

14. The method according to any one of claims 10 to 13, wherein an initial input to the first expression comprises a first value, and the first value is configured with encrypted protection.

15. The method according to any one of claims 10 to 14, wherein the target code is configured to be run in a trusted execution environment, and/or the target code is configured to perform code obfuscation.

16. The method according to any one of claims 10 to 15, wherein the target code is configured with encrypted protection by using an encryption algorithm; and
the method further comprises:
decrypting the target code in the execution code to obtain decrypted code; and
executing the decrypted code to obtain the first expression.

17. The method according to any one of claims 10 to 16, wherein the method further comprises:
obtaining a fourth computation graph based on the execution code of the AI model, wherein the fourth computation graph comprises a second operator and a third expression, the second operator is obtained after a weight parameter of a first operator in the AI model is modified, an input to the third expression comprises an output of the second operator, and an output of the third expression is the same as an output when the first operator uses a same input as the second operator; and
the processing the input data based on the second computation graph comprises:
processing the input data based on the second computation graph and the fourth computation graph.

18. The method according to claim 17, wherein a weight parameter of the second operator is obtained after the weight parameter of the first operator is modified based on a second value, the input to the third expression comprises the second value, and the second value is configured with encrypted protection.

19. A model processing apparatus, comprising a storage and a processor, wherein the storage stores code, the processor is configured to execute the code, and when the code is executed, the apparatus performs the method according to any one of claims 1 to 9.

20. A model-based data processing apparatus, comprising a storage and a processor, wherein the storage stores code, the processor is configured to execute the code, and when the code is executed, the apparatus performs the method according to any one of claims 10 to 18.

21. An AI system, comprising the model processing apparatus according to claim 19 and the model-based data processing apparatus according to claim 20.

22. A computer storage medium, wherein the computer storage medium stores instructions, and when the instructions are executed by a computer, the computer is enabled to implement the method according to any one of claims 1 to 18.

23. A computer program product, wherein the computer program product stores instructions, and when the instructions are executed by a computer, the computer is enabled to implement the method according to any one of claims 1 to 18.
